# EUROPEAN PATENT APPLICATION

(11) **EP 4 664 944 A1**
(43) Date of publication of application: **17.12.2025**
(21) Application number: 23920358.1
(22) Date of filing: 07.02.2023
(51) Int. Cl.: H04W 4/70

(54) **DATA RECEIVING AND TRANSMITTING APPARATUS AND METHOD**

(71) Applicant: FUJITSU LIMITED, Kawasaki-shi, Kanagawa 211-8588 (JP)
(72) Inventor: LI, Guorong, Beijing 100022 (CN); JIA, Meiyi, Beijing 100022 (CN); YI, Su, Beijing 100022 (CN); WANG, Xin, Beijing 100022 (CN)
(74) Representative: Haseltine Lake Kempner LLP
(86) International application number: PCT/CN2023/074806
(87) International publication number: WO 2024/164145

(57) **Abstract**

Embodiments of this disclosure provide a data reception and transmission apparatus and method. The method includes: determining first identification information of a first terminal equipment and/or first identification information of a second terminal equipment in an adaptation layer of a third terminal equipment; receiving data from the first terminal equipment; and transmitting data to the second terminal equipment according to the first identification information of the first terminal equipment and/or the first identification information of the second terminal equipment and/or second identification information of the first terminal equipment and/or second identification information of the second terminal equipment. Hence, data transmission overhead in the adaptation layer may be reduced, and radio resources may be saved.

## Description

### Technical Field

This disclosure relates to the field of communication technologies.

### Background

In the standardization process of the 5th Generation Mobile Communication Technology (5G) in the 3rd Generation Partnership Project (3GPP), new technologies have been introduced that allow user equipments (UEs) to directly discover and/or communicate with each other by using a sidelink (SL) communication technology, wherein a sidelink interface may also be referred to as PC5 interface. For example, vehicle to everything (V2X) communication, public safety (PS) communication, direct file transmission between user equipments, etc., may rely on communication on the sidelink interface.

In addition, user equipment (UE) to user equipment (UE) relay (UE-to-UE relay, U2U relay) has been introduced into Release 17 (R17) of the standardization progress, wherein the UE-to-UE relay refers to communication between "a source UE" and "a destination UE" (also referred to as "a source remote UE" and "a destination remote UE" (or, "a source UE" and "a destination UE" are collectively referred to as "a remote UE") via "a relay UE", wherein sidelink communication is used between the source UE and the relay UE, and sidelink communication is used between the relay UE and the destination UE, thereby effectively expanding coverage of sidelink transmission between the source UE and the destination UE, and saving transmitting power of the remote UE.

It should be noted that the above description of the background is merely provided for clear and complete explanation of this disclosure and for easy understanding by those skilled in the art. And it should not be understood that the above technical solution is known to those skilled in the art as it is described in the background of this disclosure.

### Summary

In the protocol stack of U2U relay in R17, an adaptation layer (ADAPT), also referred to as sidelink relay adaptation protocol (SRAP) layer, is introduced.

It was found by the inventors that due to the introduction of the concept of adaptation layer, how to determine identification information of a source UE and/or identification information of a destination UE in the adaptation layer and how to transmit data according to the identification information of the source UE and/or the identification information of the destination UE are all problems needing to be solved.

In order to solve at least one of the above problems, embodiments of this disclosure provide a data reception and transmission apparatus and method.

According to one aspect of the embodiments of this disclosure, there is provided a data reception and transmission method, applicable to a third terminal equipment, the method including:
determining first identification information of a first terminal equipment and/or first identification information of a second terminal equipment in an adaptation layer of the third terminal equipment;
receiving data from the first terminal equipment; and
transmitting data to the second terminal equipment according to the first identification information of the first terminal equipment and/or the first identification information of the second terminal equipment and/or second identification information of the first terminal equipment and/or second identification information of the second terminal equipment.

According to another aspect of the embodiments of this disclosure, there is provided a data transmission method, applicable to a first terminal equipment, the method including:
determining first identification information of the first terminal equipment and/or first identification information of a second terminal equipment in an adaptation layer of the first terminal equipment; and
transmitting data to a third terminal equipment according to the first identification information of the first terminal equipment and/or the first identification information of the second terminal equipment and/or second identification information of the first terminal equipment and/or second identification information of the second terminal equipment.

According to a further aspect of the embodiments of this disclosure, there is provided a data reception method, applicable to a second terminal equipment, the method including:
determining first identification information of a first terminal equipment and/or first identification information of the second terminal equipment in an adaptation layer of the second terminal equipment; and
receiving data from a third terminal equipment according to the first identification information of the first terminal equipment and/or the first identification information of the second terminal equipment and/or second identification information of the first terminal equipment and/or second identification information of the second terminal equipment.

According to still another aspect of the embodiments of this disclosure, there is provided a data reception and transmission apparatus, configured in a third terminal equipment, the data reception and transmission apparatus including:
a determining unit configured to determine first identification information of a first terminal equipment and/or first identification information of a second terminal equipment in an adaptation layer of the third terminal equipment;
a receiving unit configured to receive data from the first terminal equipment; and
a transmitting unit configured to transmit data to the second terminal equipment according to the first identification information of the first terminal equipment and/or the first identification information of the second terminal equipment and/or second identification information of the first terminal equipment and/or second identification information of the second terminal equipment.

According to yet another aspect of the embodiments of this disclosure, there is provided a data transmission apparatus, configured in a first terminal equipment, the data transmission apparatus including:
a determining unit configured to determine first identification information of the first terminal equipment and/or first identification information of a second terminal equipment in an adaptation layer of the first terminal equipment; and
a transmitting unit configured to transmit data to a third terminal equipment according to the first identification information of the first terminal equipment and/or the first identification information of the second terminal equipment and/or second identification information of the first terminal equipment and/or second identification information of the second terminal equipment.

According to yet still another aspect of the embodiments of this disclosure, there is provided a data reception apparatus, configured in a second terminal equipment, the data reception apparatus including:
a determining unit configured to determine first identification information of a first terminal equipment and/or first identification information of the second terminal equipment in an adaptation layer of the second terminal equipment; and
a receiving unit configured to receive data from a third terminal equipment according to the first identification information of the first terminal equipment and/or the first identification information of the second terminal equipment and/or second identification information of the first terminal equipment and/or second identification information of the second terminal equipment.

According to yet further still another aspect of the embodiments of this disclosure, there is provided a communication system, including:
a first terminal equipment configured to determine first identification information of the first terminal equipment and/or first identification information of a second terminal equipment in an adaptation layer, and transmit data to a third terminal equipment;
the third terminal equipment configured to receive the data from the first terminal equipment, determine the first identification information of the first terminal equipment and/or the first identification information of the second terminal equipment in the adaptation layer, and transmit data to the second terminal equipment according to the first identification information of the first terminal equipment and/or the first identification information of the second terminal equipment and/or second identification information of the first terminal equipment and/or second identification information of the second terminal equipment; and
the second terminal equipment configured to determine the first identification information of the first terminal equipment and/or the first identification information of the second terminal equipment in the adaptation layer, and receive the data from the third terminal equipment according to the first identification information of the first terminal equipment and/or the first identification information of the second terminal equipment and/or the second identification information of the first terminal equipment and/or the second identification information of the second terminal equipment.

An advantage of the embodiments of this disclosure exists in that the first identification information of the first terminal equipment and/or the first identification information of the second terminal equipment is/are determined in the adaptation layer of the third terminal equipment, the third terminal equipment receives data from the first terminal equipment, and transmits data to the second terminal equipment according to the first identification information of the first terminal equipment and/or the first identification information of the second terminal equipment and/or second identification information of the first terminal equipment and/or second identification information of the second terminal equipment. Therefore, the identification information of the first terminal equipment and/or the identification information of the second terminal equipment used in the adaptation layer of the third terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the spirits and scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/comprising/include/including" when used in this specification is taken to specify the presence of stated features, integers, steps or components but does not preclude the presence or addition of one or more other features, integers, steps, components or groups thereof.

### Brief Description of the Drawings

Elements and features depicted in one drawing or embodiments of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is schematic diagram of an architecture of a system protocol stack of embodiments of this disclosure;
FIG. 2 is a schematic diagram of a scenario of embodiments of this disclosure;
FIG. 3 is a schematic diagram of a data reception and transmission method of the embodiments of this disclosure;
FIG. 4 is an exemplary diagram of assigning first identification information of a first terminal equipment and/or first identification information of a second terminal equipment by a third terminal equipment of the embodiments of this disclosure;
FIG. 5 is an exemplary diagram of assigning the first identification information of the first terminal equipment and/or the first identification information of the second terminal equipment by the first terminal equipment of the embodiments of this disclosure;
FIG. 6 is another exemplary diagram of assigning the first identification information of the first terminal equipment and/or the first identification information of the second terminal equipment by the first terminal equipment of the embodiments of this disclosure;
FIG. 7 is an exemplary diagram of assigning the first identification information of the first terminal equipment and/or the first identification information of the second terminal equipment by the second terminal equipment of the embodiments of this disclosure;
FIG. 8 is another exemplary diagram of assigning the first identification information of the first terminal equipment and/or the first identification information of the second terminal equipment by the second terminal equipment of the embodiments of this disclosure;
FIG. 9 is an exemplary diagram of assigning the first identification information of the first terminal equipment and/or the first identification information of the second terminal equipment by a network of the embodiments of this disclosure;
FIG. 10 is another exemplary diagram of assigning the first identification information of the first terminal equipment and/or the first identification information of the second terminal equipment by the network of the embodiments of this disclosure;
FIG. 11 is an exemplary diagram of data transmission of the embodiments of this disclosure;
FIG. 12 is another exemplary diagram of data transmission of the embodiments of this disclosure;
FIG. 13 is a schematic diagram of a data transmission method of the embodiments of this disclosure;
FIG. 14 is a schematic diagram of a data reception method of the embodiments of this disclosure;
FIG. 15 is a schematic diagram of a data reception and transmission apparatus of the embodiments of this disclosure;
FIG. 16 is a schematic diagram of a data transmission apparatus of the embodiments of this disclosure;
FIG. 17 is a schematic diagram of a data reception apparatus of the embodiments of this disclosure;
FIG. 18 is a schematic diagram of a structure of a network device of the embodiments of this disclosure; and
FIG. 19 is a schematic diagram of a terminal equipment of the embodiments of this disclosure

### Detailed Description

These and further aspects and features of this disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the spirit and terms of the appended claims.

In the embodiments of this disclosure, terms "first", and "second", etc., are used to differentiate different elements with respect to names, and do not indicate spatial arrangement or temporal orders of these elements, and these elements should not be limited by these terms. Terms "and/or" include any one and all combinations of one or more relevantly listed terms. Terms "contain", "include" and "have" refer to existence of stated features, elements, components, or assemblies, but do not exclude existence or addition of one or more other features, elements, components, or assemblies.

In the embodiments of this disclosure, single forms "a", and "the", etc., include plural forms, and should be understood as "a kind of" or "a type of" in a broad sense, but should not defined as a meaning of "one"; and the term "the" should be understood as including both a single form and a plural form, except specified otherwise. Furthermore, the term "according to" should be understood as "at least partially according to", the term "based on" should be understood as "at least partially based on", except specified otherwise.

In the embodiments of this disclosure, the term "communication network" or "wireless communication network" may refer to a network satisfying any one of the following communication standards: long term evolution (LTE), long term evolution-advanced (LTE-A), wideband code division multiple access (WCDMA), and highspeed packet access (HSPA), etc.

And communication between devices in a communication system may be performed according to communication protocols at any stage, which may, for example, include but not limited to the following communication protocols: 1G (generation), 2G, 2.5G, 2.75G, 3G, 4G, 4.5G, 5G and new radio (NR), etc., and/or other communication protocols that are currently known or will be developed in the future.

In the embodiments of this disclosure, the term "network device", for example, refers to a device in a communication system that accesses a user equipment to the communication network and provides services for the user equipment. The network device may include but not limited to the following devices:, a base station (BS), an access point (AP), a transmission reception point (TRP), a broadcast transmitter, a mobile management entity (MME), a gateway, a server, a radio network controller (RNC), a base station controller (BSC), etc.

The base station may include but not limited to a node B (NodeB or NB), an evolved node B (eNodeB or eNB), and a 5G base station (gNB), etc. Furthermore, it may include a remote radio head (RRH), a remote radio unit (RRU), a relay, or a low-power node (such as a femto, and a pico, etc.). The term "base station" may include some or all of its functions, and each base station may provide communication coverage for a specific geographical area. And a term "cell" may refer to a base station and/or its coverage area, depending on a context of the term.

In the embodiments of this disclosure, the term "user equipment (UE)" or "terminal equipment (TE) or terminal device" refers to, for example, an equipment accessing to a communication network and receiving network services via a network device. The user equipment may be fixed or mobile, and may also be referred to as a mobile station (MS), a terminal, a subscriber station (SS), an access terminal (AT), or a station, etc.

The terminal equipment may include but not limited to the following devices: a cellular phone, a personal digital assistant (PDA), a wireless modem, a wireless communication device, a hand-held device, a machine-type communication device, a lap-top, a cordless telephone, a smart cell phone, a smart watch, and a digital camera, etc.

For another example, in a scenario of the Internet of Things (IoT), etc., the terminal equipment may also be a machine or a device performing monitoring or measurement. For example, it may include but not limited to a machine-type communication (MTC) terminal, a vehicle mounted communication terminal, a device to device (D2D) terminal, a machine to machine (M2M) terminal, and a communication terminal supporting a sidelink, etc.

Moreover, the term "network side" or "network device side" refers to a side of a network, which may be a base station or one or more network devices including those described above. The term "user side" or "terminal side" or "terminal equipment side" refers to a side of a user or a terminal, which may be a UE, and may include one or more terminal equipments described above. "A device" may refer to a network device, and may also refer to a terminal equipment.

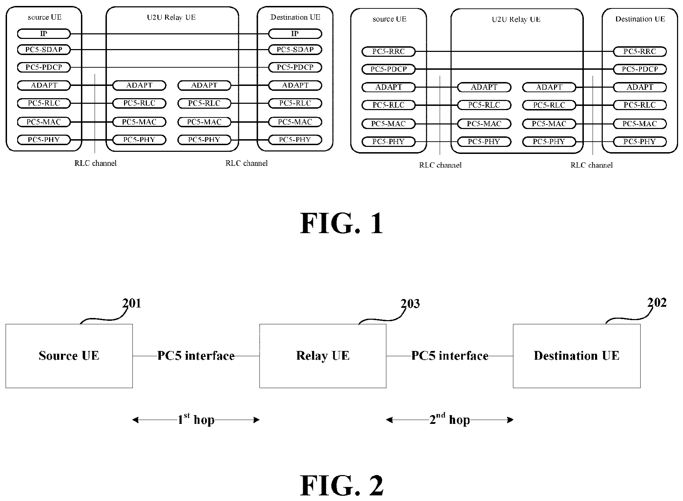

FIG. 1 is schematic diagram of an architecture of a system protocol stack of embodiments of this disclosure, including a user plane protocol stack diagram (left in the drawing) and a control plane protocol stack diagram (right in the drawing). As shown in FIG. 1, on a link of a PC5 interface, an adaptation (ADAPT) layer is supported. In the diagram of the user plane protocol stack, an IP layer, an SDAP layer and an RRC layer are located above the ADAPT layer, and an RLC layer, an MAC layer and a PHY layer are located below the ADAPT layer. In the diagram of the control plane protocol stack, an RRC layer is located above the ADAPT layer, and an RLC layer, an MAC layer and a PHY layer are located below the ADAPT layer. Optionally, the ADAPT in FIG. 1 may be replaced with an SRAP, which is not limited in this disclosure. In the diagram of the user plane protocol stack, the IP layer, SDAP layer and PDCP layer are terminated between two remote UEs, and the RLC layer, MAC layer and PHY layer are terminated in each PC5 link. In the diagram of the control plane protocol stack, the RRC layer is terminated between two remote UEs, and the RLC layer, MAC layer and PHY layer are terminated in each PC5 link.

A scenario of the embodiments of this disclosure shall be described below by way of examples; however, this disclosure is not limited thereto.

FIG. 2 is a schematic diagram of the scenario of the embodiments of this disclosure. For simplicity, signaling exchange between a UE-to-UE relay UE 203 and a source UE 201 and a destination UE 202 and a data transmission mode are schematically shown in FIG. 2. UE-to-UE relay has been studied in Release 17, wherein UE-to-UE relay is able to extend coverage of sidelink transmission between two remote UEs and save power. The scenario of this disclosure includes at least one of the following that:
all UEs (source UE(s), relay UE(s), destination UE(s)) are within coverage of a network;
all UEs (source UE(s), relay UE(s), destination UE(s)) are out of coverage of a network; or,
partial coverage, wherein at least one UE (a source UE, a relay UE, a destination UE) is within coverage of a network and at least one UE (a source UE, a relay UE, a destination UE) is out of the coverage of the network.

Reference may be made to the protocol stack in FIG. 1 for structures of the protocol stacks of the relay UE 203, source UE 201 and destination UE 202 in FIG. 2, which shall not be repeated herein any further.

For UE-to-network relay of layer 2 (L2), the network device (gNB) assigns identification information of the remote UE used in the adaptation layer, such as a local ID of the remote UE.

However, it was found by the inventors that for U2U relay of layer 2 (L2), the relay UE needs to forward data transmitted by the source UE to a corresponding destination UE, and/or inform the destination UE of a source UE from which the data come. If an existing layer 2 identifier (L2 ID) of the remote UE is directly added to a header of the U2U relay adaptation layer, relatively large signaling overhead will be incurred. If identification information of the source UE and/or identification information of the destination UE, such as a local or temporary identifier of the source UE and/or the destination UE, is/are used in the adaptation layer, signaling overhead may be saved.

Therefore, how to determine identification information of a source UE and/or identification information of a destination UE in an adaptation layer and how to transmit data according to the identification information of the source UE and/or the identification information of the destination UE are all problems needing to be solved.

In order to solve at least one of the above problems, embodiments of this disclosure provide a data reception and transmission apparatus and method.

### Embodiments of a first aspect

The embodiments of this disclosure provide a data reception and transmission method.

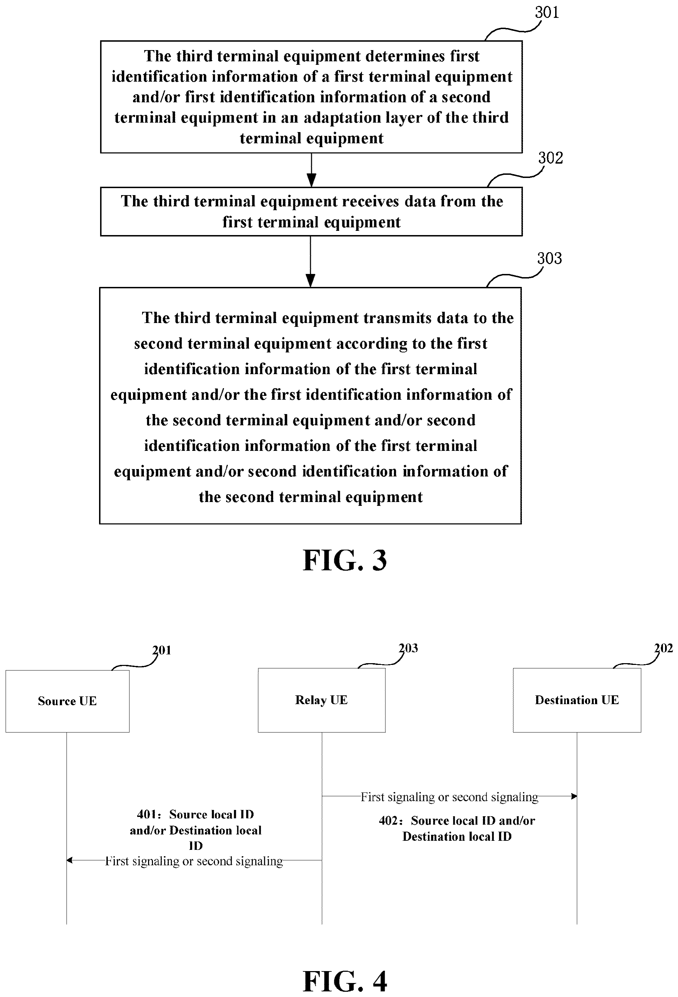

FIG. 3 is a schematic diagram of the data reception and transmission method of the embodiments of this disclosure. As shown in FIG. 3, the method is applicable to a third terminal equipment and includes:
301: the third terminal equipment determines first identification information of a first terminal equipment and/or first identification information of a second terminal equipment in an adaptation layer of the third terminal equipment;
302: the third terminal equipment receives data from the first terminal equipment; and
303: the third terminal equipment transmits data to the second terminal equipment according to the first identification information of the first terminal equipment and/or the first identification information of the second terminal equipment and/or second identification information of the first terminal equipment and/or second identification information of the second terminal equipment.

Therefore, the identification information of the first terminal equipment and/or the identification information of the second terminal equipment used in the adaptation layer of the third terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

It should be noted that FIG. 3 only schematically illustrates the embodiments of this disclosure; however, this disclosure is not limited thereto. For example, an order of execution of the operations may be appropriately adjusted, and furthermore, some other operations may be added, or some operations therein may be reduced, and objects of the operations may be adjusted. And appropriate variants may be made by those skilled in the art according to the above contents, without being limited to what is contained in FIG. 3.

In some implementations, the first terminal equipment is a source remote device, such as the source UE 201 in FIG. 2; the second terminal equipment is a destination remote device, such as the destination UE 202 in FIG. 2; and the third terminal equipment is a relay device, such as the relay UE 203 in FIG. 2.

In some implementations, the first identification information is an identifier of a terminal equipment (UE ID) used in the adaptation layer, such as a local ID of the terminal equipment, and the second identification information is the Layer-2 ID (L2 ID), which may be determined by an application layer or a V2X layer or an NAS layer of the terminal equipment according to an existing method. For example, the first identification information may also be referred to as a temporary identifier, with a length of, for example, 8 bits or 12 bits, which may save overhead compared to an L2 ID (which has a length of 24 bits). In addition, reference may be made to the relevant art for specific contents of the local ID, and this disclosure is not limited thereto.

A process of determining the first identification information of the first terminal equipment and/or the first identification information of the second terminal equipment in step 301 shall be exemplarily described below.

In some implementations, the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.

The third terminal equipment assignment shall be exemplarily described below.

In some implementations, that the third terminal equipment assigns the first identification information of the first terminal equipment and/or the first identification information of the second terminal equipment includes that: the third terminal equipment transmits the first identification information of the first terminal equipment and/or the first identification information of the second terminal equipment to the first terminal equipment; the third terminal equipment transmits the first identification information of the first terminal equipment and/or the first identification information of the second terminal equipment to the second terminal equipment.

FIG. 4 is an exemplary diagram of assigning the first identification information of the first terminal equipment and/or the first identification information of the second terminal equipment by the third terminal equipment of the embodiments of this disclosure.

As shown in FIG. 4, the first terminal equipment includes a source UE 201, the second terminal equipment includes a destination UE 202, and the third terminal equipment includes a U2U relay UE 203. The first identification information of the first terminal equipment includes a local ID of the source UE 201(source local ID), and the first identification information of the second terminal equipment includes a local ID of the destination UE 202 (destination local ID); and the second identification information of the first terminal equipment includes an L2 ID of the source UE 201 (source L2 ID), and the second identification information of the second terminal equipment includes an L2 ID of the destination UE 202 (destination L2 ID).

For example, that the third terminal equipment assigns the first identification information of the first terminal equipment and/or the first identification information of the second terminal equipment includes:
401: the relay UE 203 transmits a source local ID and/or a destination local ID to the source UE 201; and
402: the relay UE 203 transmits the source local ID and/or the destination local ID to the destination UE 202.

For example, the relay UE 203 transmits the source local ID and the destination local ID to the source UE 201 and the destination UE 202. For another example, the relay UE 203 transmits only the source local ID to the source UE 201 and the destination UE 202, wherein the source UE, the relay UE and the destination UE may determine a corresponding destination UE 202 according to the source local ID, for example, the source local ID and the destination local ID are in a predefined one-to-one correspondence (or may be in other correspondences, which is not limited in this disclosure). For example, combinations of other contents transmitted by the relay UE 203 in step 401 and step 402 are similar to the above examples, which shall not be enumerated herein any further.

Thus, with the assignment of the relay UE, both the source UE 201 and the corresponding destination UE 202 may be determined among a source UE, a relay UE and a destination UE, hence, data reception and transmission may be performed among the source UE, the relay UE and the destination UE.

For example, an order of execution of step 401 and step 402 is not limited in this disclosure, that is, the relay UE 203 may transmit the source local ID and/or the destination local ID to the source UE 201 first, and then transmit the source local ID and/or the destination local ID to the destination UE 202; or, the relay UE 203 may transmit the source local ID and/or the destination local ID to the destination UE 202 first, and then transmit the source local ID and/or the destination local ID to the source UE 201.

In some implementations, that the third terminal equipment assigns the first identification information of the first terminal equipment and/or the first identification information of the second terminal equipment includes: transmitting the first identification information of the second terminal equipment and the second identification information of the second terminal equipment to the first terminal equipment; and/or, transmitting the first identification information of the first terminal equipment and the second identification information of the first terminal equipment to the second terminal equipment.

For example, still taking FIG. 4 as an example, the relay UE 203 may transmit the destination local ID and the destination L2 ID to the source UE 201 (not shown in FIG. 4) in step 401, and/or, the relay UE 203 may transmit the source local ID and the source L2 ID to the destination UE 202 in step 402 (not shown in FIG. 4).

For example, the relay UE 203 transmits the destination local ID and the destination L2 ID to the source UE 201, and/or, the relay UE 203 transmits the source local ID and the source L2 ID to the destination UE 202.

In some implementations, the third terminal equipment transmits the second identification information (source L2 ID) of the first terminal equipment and/or the second identification information (destination L2 ID) of the second terminal equipment to the first terminal equipment, such as transmitting the source local ID and a source L2 ID to which it corresponds and/or the destination local ID and a destination L2 ID to which it corresponds.

In some implementations, the third terminal equipment transmits the second identification information (source L2 ID) of the first terminal equipment and/or the second identification information (destination L2 ID) of the second terminal equipment to the second terminal equipment, such as transmitting the source local ID and a source L2 ID to which it corresponds and/or the destination local ID and a destination L2 ID to which it corresponds.

In some implementations, the third terminal equipment and/or the first terminal equipment and/or the second terminal equipment store(s) a correspondence between the source local ID and the source L2 ID, and/or store(s) a correspondence between the destination local ID and the destination L2 ID.

Thus, with the assignment of the relay UE, both the source UE 201 and the corresponding destination UE 202 may be determined among a source UE, a relay UE and a destination UE, hence, data reception and transmission may be performed among the source UE, the relay UE and the destination UE.

In some implementations, the third terminal equipment transmits the first identification information of the first terminal equipment and/or the second identification information of the first terminal equipment and/or the first identification information of the second terminal equipment and/or the second identification information of the second terminal equipment to the first terminal equipment and/or the second terminal equipment via first signaling or second signaling.

For example, as shown in FIG. 4, in step 401, the relay UE 203 transmits the source local ID and/or the destination local ID to the source UE 201 via the first signaling or the second signaling; and in step 402, the relay UE 203 transmits the source local ID and/or destination local ID to the destination UE 202 via the first signaling or the second signaling.

In some implementations, the first signaling is PC5-S signaling. For example, the first signaling is signaling in a PC5 interface, such as PC5-S signaling or V2X (vehicle-to-everything) layer signaling or non-access stratum (NAS) signaling.

In some implementations, the first signaling includes at least one of the following signaling: a direct communication request and/or direct communication accept; a discovery message (such as a discovery solicitation) and/or a discovery response message (such as a discovery response), or other PC5-S messages.

For example, for step 401, the relay UE 203 notifies the source UE 201 by adding the source local ID and/or the destination local ID in "direct communication accept". Reference may be made to the relevant art for specific contents of the above PC5-S signaling, which is not limited in this disclosure.

In some implementations, the second signaling is PC5-RRC signaling, for example, the second signaling is signaling of an RRC layer in the PC5 interface.

In some implementations, the second signaling includes at least one of the following signaling:
sidelink RRC reconfiguration information (RRCReconfigurationSidelink),
sidelink RRC reconfiguration complete information (RRCReconfigurationCompleteSidelink),
sidelink UE capacity enquiry information (UECapacityEnquirySidelink),
sidelink UE capacity information (UECapacityInformationSidelink),
sidelink master information block (MasterInformationBlockSidelink),
sidelink UE assistance information (UEAssistanceInformationSidelink),
sidelink remote UE information (RemoteUEInformationSidelink), or
sidelink notification message (NotificationMessageSidelink).

For example, for step 401, the relay UE 203 notifies the source UE 201 by adding the source local ID and/or the destination local ID in the "sidelink RRC reconfiguration complete information (RRCReconfigurationCompleteSidelink)". Reference may be made to the relevant art for specific contents of the above PC5-RRC signaling, which is not limited in this disclosure.

Thus, the first terminal equipment, the second terminal equipment and the third terminal equipment may determine the identification information needed by the adaptation layer, so as to accurately perform data transmission.

The first terminal equipment assignment shall be exemplarily described below.

In some implementations, that the first terminal equipment assigns the first identification information of the first terminal equipment and/or the first identification information of the second terminal equipment includes that: the third terminal equipment receives the first identification information of the first terminal equipment and/or the first identification information of the second terminal equipment and the second identification information of the second terminal equipment transmitted by the first terminal equipment; and the third terminal equipment transmits the first identification information of the first terminal equipment and/or the first identification information of the second terminal equipment to the second terminal equipment.

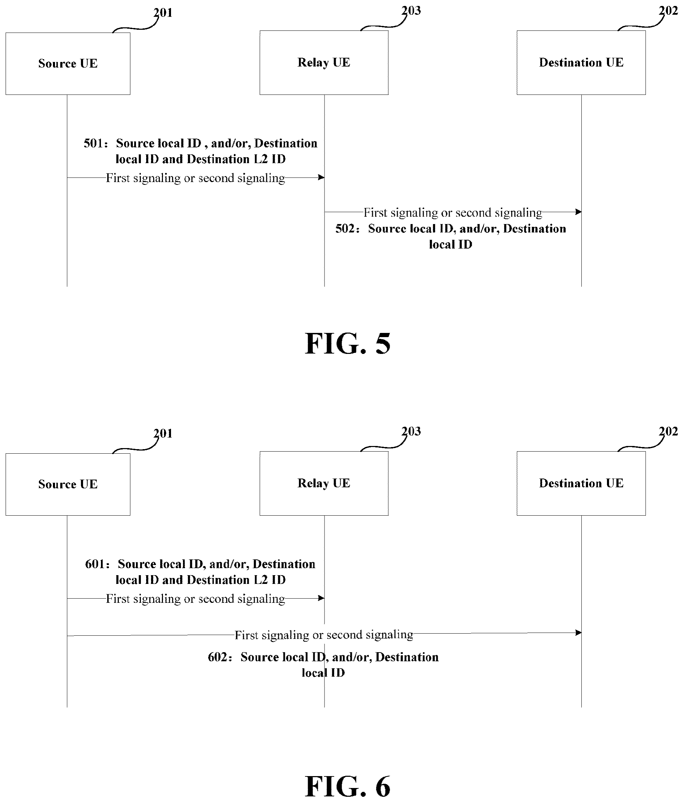

FIG. 5 is an exemplary diagram of assigning the first identification information of the first terminal equipment and/or the first identification information of the second terminal equipment by the first terminal equipment of the embodiments of this disclosure.

As shown in FIG. 5, the first terminal equipment includes a source UE 201, the second terminal equipment includes a destination UE 202, and the third terminal equipment includes a U2U relay UE 203.; The first identification information of the first terminal equipment includes a source local ID, and the first identification information of the second terminal equipment includes a destination local ID; and the second identification information of the first terminal equipment includes a source L2 ID, and the second identification information of the second terminal equipment includes a destination L2 ID.

For example, that the first terminal equipment assigns the first identification information of the first terminal equipment and/or the first identification information of the second terminal equipment includes:
501: the source UE 201 transmits the source local ID, and/or the destination local ID and the destination L2 ID to the relay UE 203; and
502: the relay UE 203 transmits the source local ID and/or the destination local ID to the destination UE 202.

For example, source UE 201 transmits the source local ID, the destination local ID and the destination L2 ID to the relay UE 203, and the relay UE 203 transmits the source local ID to the destination UE 202. For another example, the source UE 201 transmits the source local ID, the destination local ID and the destination L2 ID to the relay UE 203, and the relay UE 203 transmits the source local ID and the destination local ID to the destination UE 202. For example, combinations of other contents transmitted in step 501 and step 502 are similar to the above examples, which shall not be enumerated herein any further.

A correspondence between the first identification information and the second identification information shall be described below.

In some embodiments, the relay UE 203 receives the source local ID, and obtains the source L2 ID according to a header of an MAC PDU where the source local ID is located and sidelink control information (SCI) indicating a physical sidelink shared channel (PSSCH) where the MAC PDU is located.

In some embodiments, the source UE 201 may further transmit the source L2 ID to the relay UE 203 in step 501 (not shown in FIG. 5). For example, the source UE 201 transmits the source local ID and the source L2 ID (and/or the destination local ID and the destination L2 ID) together to the relay UE 203. Hence, the relay UE 203 obtains the source L2 ID.

In some embodiments, the relay UE 203 transmits the source L2 ID and/or the destination L2 ID to the destination UE 202 in step 502 (not shown in FIG. 5). For example, the relay UE 203 transmits the source local ID and the source L2 ID (and/or the destination local ID) together to the destination UE 202.

In some embodiments, the relay UE 203 and/or the source UE 201 and/or the destination UE 202 store(s) a correspondence between the source local ID and the source L2 ID and/or store(s) a correspondence between the destination local ID and the destination L2 ID. Thus, with the assignment of the source UE 201, both the source UE 201 and the corresponding destination UE 202 may be determined among a source UE, a relay UE and a destination UE, hence, data reception and transmission may be performed among the source UE, the relay UE and the destination UE.

For example, an order of execution of step 501 and step502 is not limited in this disclosure, and is similar to the above example of the order of step 401 and step 402 which shall not be repeated herein any further.

For example, reference may be made to the above explanations in the embodiments of this disclosure for specific contents of the first signaling and second signaling in FIG. 5, which shall not be repeated herein any further.

In some implementations, that the first terminal equipment assigns the first identification information of the first terminal equipment and/or the first identification information of the second terminal equipment includes: receiving the first identification information of the first terminal equipment and/or the first identification information of the second terminal equipment and the second identification information of the second terminal equipment transmitted by the first terminal equipment, wherein the first terminal equipment further transmits the first identification information of the first terminal equipment and/or the first identification information of the second terminal equipment to the second terminal equipment.

FIG. 6 is another exemplary diagram of assigning the first identification information of the first terminal equipment and/or the first identification information of the second terminal equipment by the first terminal equipment of the embodiments of this disclosure.

As shown in FIG. 6, the first terminal equipment includes a source UE 201, the second terminal equipment includes a destination UE 202, and the third terminal equipment includes a U2U relay UE 203. The first identification information of the first terminal equipment includes a local ID of the source UE 201 (source local ID), and the first identification information of the second terminal equipment includes a local ID of the destination UE 202 (destination local ID). The second identification information of the first terminal equipment includes an L2 ID of the source UE 201 (source L2 ID), and the second identification information of the second terminal equipment includes an L2 ID of the destination UE 202 (destination L2 ID).

For example, that the first terminal equipment assigns the first identification information of the first terminal equipment and/or the first identification information of the second terminal equipment includes:
601: the source UE 201 transmits the source local ID, and/or, the destination local ID and the destination L2 ID to the relay UE 203; and
602: the source UE 201 transmits the source local ID and/or the destination local ID to the destination UE 202.

For example, the source UE 201 transmits the source local ID, the destination local ID and the destination L2 ID to the relay UE 203, and the source UE 201 transmits the source local ID to the destination UE 202. For another example, the source UE 201 transmits the source local ID, the destination local ID and the destination L2 ID to the relay UE 203, and the source UE 201 transmits the source local ID and the destination local ID to the destination UE 202. For example, combinations of other contents transmitted in step 601 and step 602 are similar to the above examples, which shall not be enumerated herein any further.

In some embodiments, the relay UE 203 receives the source local ID in step 601, and obtains the source L2 ID according to a header of an MAC PDU where the source local ID is located and an SCI indicating a PSSCH where the MAC PDU is located.

In some embodiments, the source UE 201 may further transmit the source L2 ID to the relay UE 203 in step 601 (not shown in FIG. 6). For example, the source UE 201 transmits the source local ID and the source L2 ID (and/or the destination local ID and the destination L2 ID) together to the relay UE 203, hence, the relay UE 203 obtains the source L2 ID.

In some embodiments, the destination UE 202 receives the source local ID in step 602 (not shown in FIG. 6), and obtains the source L2 ID according to a header of an MAC PDU where the source local ID is located and an SCI indicating a PSSCH where the MAC PDU is located.

In some embodiments, the source UE 201 may further transmit the source L2 ID to the destination UE 202 in step 602 (not shown in FIG. 6). For example, the source UE 201 transmits the source local ID and the source L2 ID (and/or the destination local ID and the destination L2 ID) together to the destination UE 202, hence, the destination UE 202 obtains the source L2 ID.

In some embodiments, the relay UE 203 and/or the source UE 201 and/or the destination UE 202 store(s) a correspondence between the source local ID and the source L2 ID, and/or store(s) a correspondence between the destination local ID and the destination L2 ID.

Thus, with the assignment of the source UE 201, both the source UE 201 and the corresponding destination UE 202 may be determined among a source UE, a relay UE and a destination UE, hence, data reception and transmission may be performed among the source UE, the relay UE and the destination UE.

For example, an order of execution of step 601 and step 602 is not limited in this disclosure, and is similar to the above example of the order of step 401 and step 402 which shall not be repeated herein any further.

For example, reference may be made to the above explanations in the embodiments of this disclosure for specific contents of the first signaling and second signaling in FIG. 6, which shall not be repeated herein any further.

The second terminal equipment assignment shall be exemplarily described below.

In some implementations, that the second terminal equipment assigns the first identification information of the first terminal equipment and/or the first identification information of the second terminal equipment includes: receiving, by the third terminal equipment, the first identification information of the second terminal equipment and/or the first identification information of the first terminal equipment and the second identification information of the first terminal equipment transmitted by the second terminal equipment; and transmitting the first identification information of the second terminal equipment and/or the first identification information of the first terminal equipment by the third terminal equipment to the first terminal equipment.

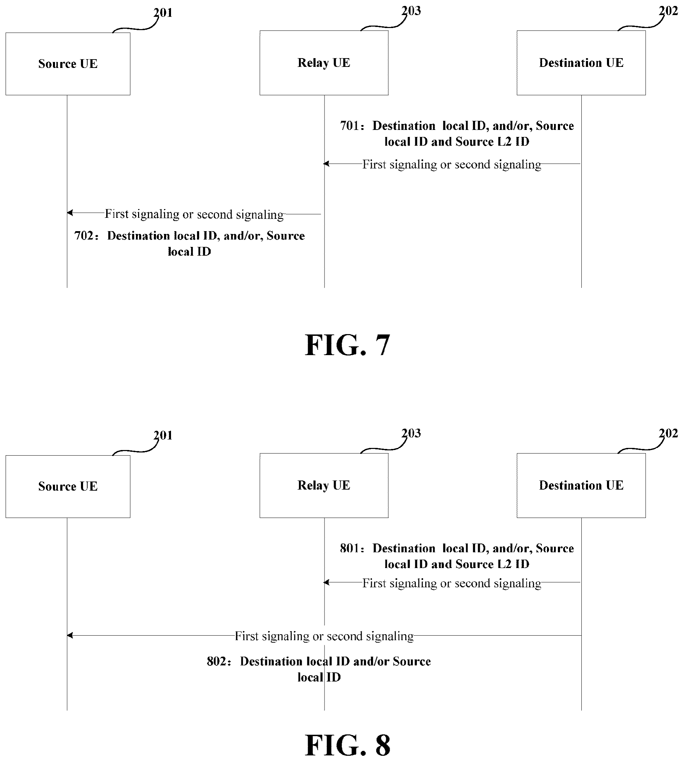

FIG. 7 is an exemplary diagram of assigning the first identification information of the first terminal equipment and/or the first identification information of the second terminal equipment by the second terminal equipment of the embodiments of this disclosure.

As shown in FIG. 7, the first terminal equipment includes a source UE 201, the second terminal equipment includes a destination UE 202, and the third terminal equipment includes a U2U relay UE 203. The first identification information of the first terminal equipment includes a local ID of the source UE 201(source local ID), and the first identification information of the second terminal equipment includes a local ID of the destination UE 202(destination local ID). The second identification information of the first terminal equipment includes an L2 ID of the source UE 201(source L2 ID), and the second identification information of the second terminal equipment includes an L2 ID of the destination UE 202(destination L2 ID).

For example, that the second terminal equipment assigns the first identification information of the first terminal equipment and/or the first identification information of the second terminal equipment includes:
701: the destination UE 202 transmits the destination local ID, and/or, the source local ID and the source L2 ID to the relay UE 203; and
702: the relay UE 203 transmits the destination local ID and/or the source local ID to the source UE 201.

For example, the destination UE 202 transmits the destination local ID, the source local ID and the source L2 ID to the relay UE 203, and the relay UE 203 transmits the destination local ID to the source UE 201. For another example, the destination UE 202 transmits the destination local ID, the source local ID and the source L2 ID to the relay UE 203, and the relay UE 203 transmits the destination local ID and the source local ID to the source UE 201. For example, combinations of other contents transmitted in step 701 and step 702 are similar to the above examples, which shall not be enumerated herein any further.

In some embodiments, the relay UE 203 receives the destination local ID, and obtains the destination L2 ID according to a header of an MAC PDU where the destination local ID is located and an SCI indicating a PSSCH where the MAC PDU is located.

In some embodiments, the destination UE 202 may further transmit the destination L2 ID to the relay UE 203 in step 701 (not shown in FIG. 7). For example, the destination UE 202 transmits the destination local ID and the destination L2 ID (and/or the source local ID and the source L2 ID) together to the relay UE 203, hence, the relay UE 203 obtains the destination L2 ID.

In some embodiments, the relay UE 203 transmits the source L2 ID and/or the destination ID to the source UE 201 in step 702 (not shown in FIG. 7). For example, the relay UE 203 transmits the destination local ID and the destination L2 ID (and/or the source local ID) together to the source UE 201.

In some embodiments, the relay UE 203 and/or the source UE 201 and/or the destination UE 202 store(s) a correspondence between the source local ID and the source L2 ID and/or store(s) a correspondence between the destination local ID and the destination L2 ID.

Thus, with the assignment of the destination UE 202, both the source UE 201 and the corresponding destination UE 202 may be determined among a source UE, a relay UE and a destination UE, hence, data reception and transmission may be performed among the source UE, the relay UE and the destination UE.

For example, an order of execution of step 701 and step 702 is not limited in this disclosure, and is similar to the above example of the order of step 401 and step 402, which shall not be repeated herein any further.

For example, reference may be made to the above explanations in the embodiments of this disclosure for specific contents of the first signaling and second signaling in FIG. 7, which shall not be repeated herein any further.

In some implementations, that the second terminal equipment assigns the first identification information of the first terminal equipment and/or the first identification information of the second terminal equipment includes: receiving, by the third terminal equipment, the first identification information of the second terminal equipment and/or the first identification information of the first terminal equipment and the second identification information of the first terminal equipment transmitted by the second terminal equipment; and transmitting, by the second terminal equipment, the first identification information of the second terminal equipment and/or the first identification information of the first terminal equipment to the first terminal equipment.

FIG. 8 is another exemplary diagram of assigning the first identification information of the first terminal equipment and/or the first identification information of the second terminal equipment by the second terminal equipment of the embodiments of this disclosure.

As shown in FIG. 8, the first terminal equipment includes a source UE 201, the second terminal equipment includes a destination UE 202, and the third terminal equipment includes a U2U the relay UE 203. The first identification information of the first terminal equipment includes a local ID of the source UE 201 (source local ID), and the first identification information of the second terminal equipment includes a local ID of the destination UE 202(Destination local ID). The second identification information of the first terminal equipment includes an L2 ID of the source UE 201(source L2 ID), and the second identification information of the second terminal equipment includes an L2 ID of the destination UE 202(Destination L2 ID).

For example, that the second terminal equipment assigns the first identification information of the first terminal equipment and/or the first identification information of the second terminal equipment includes:
801: the destination UE 202 transmits the destination local ID, and/or, the source local ID and the source L2 ID to the relay UE 203; and
802: the destination UE 202 transmits the destination local ID, and/or, the source local ID to the source UE 201.

For example, the destination UE 202 transmits destination local ID, the source local ID and the source L2 ID to the relay UE 203, and the destination UE 202 transmits the destination local ID to the source UE 201. For another example, the destination UE 202 transmits the destination local ID, the source local ID and source L2 ID to the relay UE 203, and the destination UE 202 transmits the destination local ID and the source local ID to the source UE 201. For example, combinations of other contents transmitted in step 801 and step 802 are similar to the above examples, which shall not be enumerated herein any further.

In some embodiments, the relay UE 203 receives the destination local ID in step 801, and obtains the destination L2 ID according to a header of an MAC PDU where the destination local ID is located and an SCI indicating a PSSCH where the MAC PDU is located.

In some embodiments, the destination UE 202 may further transmit the destination L2 ID to the relay UE 203 in step 801 (not shown in FIG. 8). For example, the destination UE 202 transmits the destination local ID and the destination L2 ID (and/or the source local ID and the source L2 ID) together to the relay UE 203, hence, the relay UE 203 obtains the destination L2 ID.

For example, the source UE 201 receives the destination local ID (not shown in FIG. 8) transmitted by the destination UE 202 in step 802, and obtains the destination L2 ID according to the header of the MAC PDU where the destination local ID is located and the SCI indicating the PSSCH where the MAC PDU is located.

In some embodiments, the destination UE 202 may further transmit the destination L2 ID to the source UE 201 in step 802 (not shown in FIG. 8). For example, the destination UE 202 transmits the destination local ID and destination L2 ID (and/or the source local ID and the source L2 ID) together to the source UE 201, hence, the source UE 201 obtains the destination L2 ID.

In some embodiments, the relay UE 203 and/or the source UE 201 and/or the destination UE 202 store(s) a correspondence between the source local ID and the source L2 ID, and/or store(s) a correspondence between the destination local ID and the destination L2 ID.

Thus, with the assignment of the destination UE 202, both the source UE 201 and the corresponding destination UE 202 may be determined among a source UE, a relay UE and a destination UE, hence, data reception and transmission may be performed among the source UE, the relay UE and the destination UE.

For example, an order of execution of step 801 and step 802 is not limited in this disclosure, and is similar to the above example of the order of step 401 and step 402, which shall not be repeated herein any further.

For example, reference may be made to the above explanations in the embodiments of this disclosure for specific contents of the first signaling and second signaling in FIG. 8, which shall not be repeated herein any further.

The network device assignment shall be exemplarily described below.

In some implementations, that the network device assigns the first identification information of the first terminal equipment and/or the first identification information of the second terminal equipment includes: receiving, by the third terminal equipment, the first identification information of the first terminal equipment and the first identification information of the second terminal equipment, and/or the second identification information of the first terminal equipment, and/or the second identification information of the second terminal equipment, transmitted by the network device.

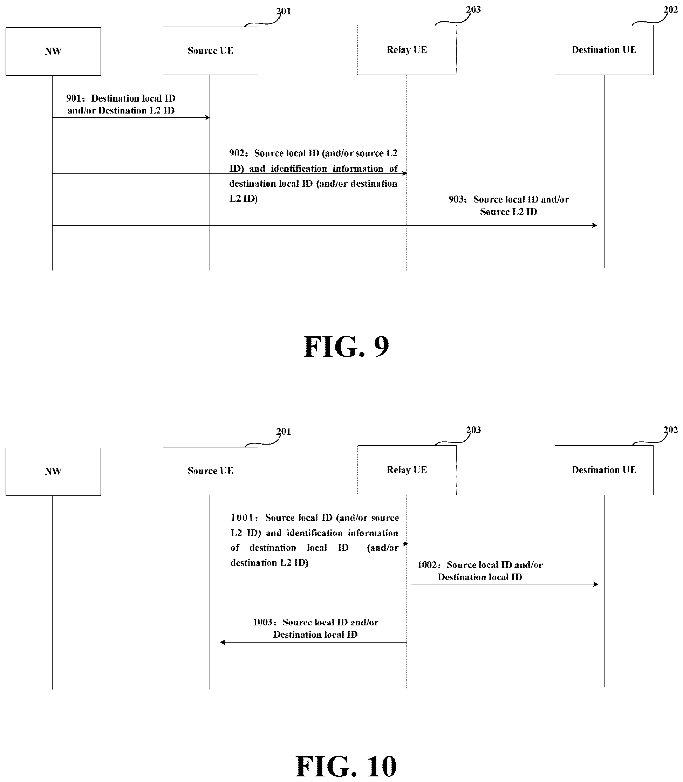

FIG. 9 is an exemplary diagram of assigning the first identification information of the first terminal equipment and/or the first identification information of the second terminal equipment by the network device of the embodiments of this disclosure.

For example, that the network device assigns the first identification information of the first terminal equipment and/or the first identification information of the second terminal equipment includes:
901: the network device notifies the source UE 201 of a corresponding destination local ID and/or destination L2 ID;
902: the network device notifies the relay UE 203 of a source local ID (and/or a source L2 ID) and a destination local ID (and/or a destination L2 ID); and
903: the network device notifies the destination UE 202 of a corresponding source local ID and/or source L2 ID.

Thus, with the assignment of the network device, both the source UE 201 and the corresponding destination UE 202 may be determined among a source UE, a relay UE and a destination UE, hence, data reception and transmission may be performed among the source UE, the relay UE and the destination UE.

For example, an order of execution of step 901-step 903 is not limited in this disclosure, and is similar to the above example of the order of step 401 and step 402, which shall not be repeated herein any further.

In some implementations, that the network device assigns the first identification information of the first terminal equipment and/or the first identification information of the second terminal equipment further includes: transmitting the first identification information of the first terminal equipment and/or the second identification information of the first terminal equipment and/or the first identification information of the second terminal equipment and/or the second identification information of the second terminal equipment by the third terminal equipment to the first terminal equipment; and/or, transmitting the first identification information of the first terminal equipment and/or the second identification information of the first terminal equipment and/or the first identification information of the second terminal equipment and/or the second identification information of the second terminal equipment by the third terminal equipment to the second terminal equipment.

FIG. 10 is another exemplary diagram of assigning the first identification information of the first terminal equipment and/or the first identification information of the second terminal equipment by the network device of the embodiments of this disclosure.

For example, that the network device assigns the first identification information of the first terminal equipment and/or the first identification information of the second terminal equipment includes:
1001: the network device notifies the relay UE 203 of a destination local ID (and/or a destination L2 ID) and a source local ID (and/or a source L2 ID);
1002: the relay UE 203 transmits the source local ID and/or the destination local ID to the destination UE 202; and
1003: the relay UE 203 transmits the source local ID and/or the destination local ID to the source UE 201.

In some embodiments, the relay UE 203 and/or the source UE 201 and/or the destination UE 202 store(s) a correspondence between the source local ID and the source L2 ID, and/or store(s) a correspondence between the destination local ID and the destination L2 ID. Thus, with the assignment of the network device, both the source UE 201 and the corresponding destination UE 202 may be determined among a source UE, a relay UE and a destination UE, hence, data reception and transmission may be performed among the source UE, the relay UE and the destination UE.

For example, reference may be made to step 401 and step 402 for detailed description of step 1002 and step 1003, which shall not be repeated herein any further.

For example, an order of execution of step 1002 and step 1003 is not limited in this disclosure, and is similar to the above example of the order of step 401 and step 402, which shall not be repeated herein any further.

Thus, with the joint assignment of the network device and the third terminal equipment, both the source UE 201 and the corresponding destination UE 202 may be determined among a source UE, a relay UE and a destination UE, hence, data reception and transmission may be performed among the source UE, the relay UE and the destination UE.

The above description is given by taking joint assignment of the third terminal equipment and the network device as an example. Likewise, the first terminal equipment and the network device may also jointly assign, i.e. similar to FIG. 10, such as by combining FIG. 9 and FIG. 5 (or FIG. 6); and the second terminal equipment and network device may also jointly assign, i.e. similar to FIG. 10, such as by combining FIG. 9 and FIG. 7 (or FIG. 8), which shall not be repeated herein any further.

The preconfiguration shall be described below.

In some implementations, preconfiguring the first identification information of the first terminal equipment and/or the first identification information of the second terminal equipment includes: determining the first identification information of the first terminal equipment and the first identification information of the second terminal equipment, and/or the second identification information of the first terminal equipment, and/or the second identification information of the second terminal equipment, according to first preconfiguration information.

For example, similar to the process in FIG. 9, the entire process of network notification in FIG. 9 is replaced with the first preconfiguration information. For example, the first terminal equipment, the second terminal equipment and the third terminal equipment respectively obtain the destination local ID (and/or the destination L2 ID) of the destination UE 202 and the source local ID (and/or the source L2 ID) of the source UE 201 according to their respective first preconfiguration information ("preconfig" information) therein.

In some embodiments, the relay UE 203 and/or the source UE 201 and/or the destination UE 202 store(s) a correspondence between the source local ID and the source L2 ID, and/or store(s) a correspondence between the destination local ID and the destination L2 ID.

Thus, with the preconfiguration, both "the source UE 201 and the corresponding destination UE 202" may be determined among a source UE, a relay UE and a destination UE, hence, data reception and transmission may be performed among the source UE, the relay UE and the destination UE.

In some implementations, preconfiguring the first identification information of the first terminal equipment and/or the first identification information of the second terminal equipment further includes: transmitting the first identification information of the first terminal equipment and/or the second identification information of the first terminal equipment and/or the first identification information of the second terminal equipment and/or the second identification information of the second terminal equipment to the first terminal equipment; and/or, transmitting the first identification information of the first terminal equipment and/or the second identification information of the first terminal equipment and/or the first identification information of the second terminal equipment and/or the second identification information of the second terminal equipment to the second terminal equipment.

For example, similar to the process in FIG. 10, the entire process of network notification in FIG. 10 is replaced with the first preconfiguration information. For example, the third terminal equipment obtains the destination local ID (and/or the destination L2 ID) of the destination UE 202 and the source local ID (and/or the source L2 ID) of the source UE 201 according to the first preconfiguration information ("preconfig" information) therein, and similar to step 1002 and step 1003 in FIG. 10, the third terminal equipment transmits related information to the first terminal equipment and the second terminal equipment respectively.

Thus, with the joint configuration of the preconfiguration and the third terminal equipment, both the source UE 201 and the corresponding destination UE 202 may be determined among a source UE, a relay UE and a destination UE, hence, data reception and transmission may be performed among the source UE, the relay UE and the destination UE.

The above description is given by taking joint assignment of the third terminal equipment and the network device as an example. Likewise, the first terminal equipment and the network device may also jointly assign, i.e. similar to FIG. 10, such as by combining FIG. 9 and FIG. 5 (or FIG. 6); and the second terminal equipment and network device may also jointly assign, i.e. similar to FIG. 10, such as by combining FIG. 9 and FIG. 7 (or FIG. 8), which shall not be repeated herein any further.

In the case where the first identification information of the first terminal equipment and/or the first identification information of the second terminal equipment is/are assigned and determined, and/or in the case where the second identification information of the first terminal equipment and/or the second identification information of the second terminal equipment is/are determined, accurate data transmission may be performed among the first terminal equipment, the second terminal equipment and the third terminal equipment. The data transmission process in step 302 and step 303 shall be exemplarily described below.

In some implementations, the third terminal equipment receives data transmitted by the first terminal equipment, wherein the first terminal equipment adds the first identification information of the second terminal equipment to a header of an adaptation layer of the data. The third terminal equipment transmits the data to the second terminal equipment, wherein the third terminal equipment adds the first identification information of the first terminal equipment to the header of the adaptation layer of the data.

In some implementations, after receiving the data transmitted by the first terminal equipment, the third terminal equipment determines the first identification information of the first terminal equipment according to the second identification information of the first terminal equipment, and/or determines the second identification information of the second terminal equipment according to the first identification information of the second terminal equipment.

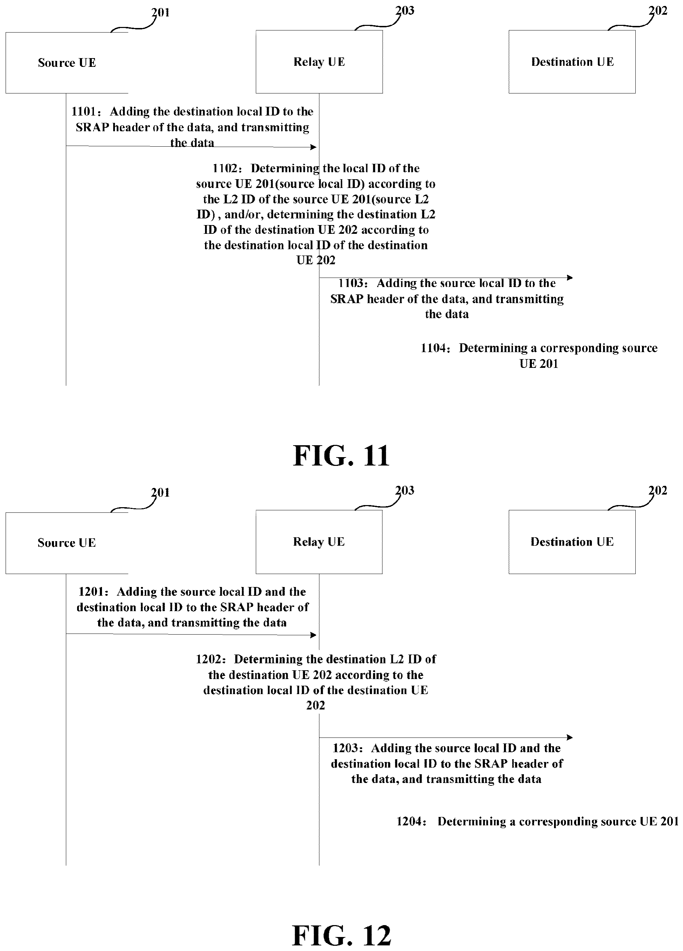

FIG. 11 is an exemplary diagram of data transmission of the embodiments of this disclosure.

Step 1101: the source UE 201 transmits data to the relay UE 203, wherein the data are payloads of an adaptation layer PDU for the relay UE 203, and the source UE 201 adds the destination local ID of the destination UE 202 (Destination local ID) to the header of the adaptation layer(SRAP header, or referred to as an ADAPT header) of the data, such as 8-bit "00000001".

For example, in the source UE 201, the data of the application layer are to be transmitted to the destination UE 202, hence, the data of the application layer are associated with the L2 ID of the destination UE 202. When the data reach the adaptation layer, the adaptation layer determines the local ID of the destination UE 202 according to the L2 ID of the destination UE 202 and a correspondence between the L2 ID and local ID of the destination UE 202. The source UE 201 includes the local ID of the destination UE 202 in the header of the adaptation layer; hence, the data of the source UE 201 are transmitted to the relay UE 203 after being transmitted via the adaptation layer, the RLC layer, the MAC layer and the physical layer. For example, the header of the SRAP PDU transmitted by the source UE 201 includes the local ID of the destination UE 202, the header of the transmitted MAC PDU includes high 16 bits of the L2 ID of the source UE 201 and high 8 bits of the L2 ID of the relay UE 203, and the SCI indicates low 8 bits of the L2 ID of the source UE 201 and low 16 bits of the L2 ID of the relay UE 203.

Step 1102: after the relay UE 203 receives the data transmitted by the source UE 201, the relay UE 203 determines the local ID of the source UE 201(source local ID) according to the L2 ID of the source UE 201(source L2 ID), and/or, determines the destination L2 ID of the destination UE 202 according to the destination local ID of the destination UE 202.

For example, the relay UE 203 receives an MAC PDU transmitted by the source UE 201, and obtains the source L2 ID according to the high 16 bits of the source L2 ID included in the header of the MAC PDU and the low 8 bits of the source L2 ID included in the SCI indicating the PSSCH where the MAC PDU is located. The relay UE 203 may determine the source local ID according to its own determined or notified correspondence between the source L2 ID and the source local ID. In addition, the relay UE 203 determines the destination L2 ID according to the destination local ID included in the header of the adaptation layer and the its own determined or notified correspondence between the destination L2 ID and the destination local ID.

Step 1103: the relay UE 203 adds the source local ID of the source UE 201 to the header of the adaptation layer when the relay UE 203 transmits the data to the destination UE 202, wherein the relay UE 203 transmits the data to the corresponding destination UE 202 via the destination L2 ID. For example, the relay UE 203 transmit to the destination UE 202 in the MAC layer and physical layer by using the destination L2 ID (such as the MAC PDU header including the high 8 bits of the destination L2 ID and the SCI including the low 16 bits of the destination L2 ID).

Step 1104: the destination UE 202 learns which source UE transmits data to itself via the source local ID of the source UE 201 in the adaptation layer when the destination UE 202 receives the data.

Thus, data reception and transmission may be performed among the source UE, the relay UE and the destination UE.

In some implementations, the third terminal equipment receives data transmitted by the first terminal equipment, wherein the first terminal equipment adds the first identification information of the second terminal equipment to a header of an adaptation layer of the data; and the third terminal equipment transmits data to the second terminal equipment, wherein the third terminal equipment adds the first identification information of the first terminal equipment and the first identification information of the second terminal equipment to a header of an adaptation layer of the data.

For example, still taking FIG. 11 as an example, a difference from FIG. 11 is that in step 1103, "adding the source local ID and destination local ID to the SRAP header of the data and transmitting the data".

In some implementations, the third terminal equipment receives the data transmitted by the first terminal equipment, wherein the first terminal equipment adds the first identification information of the first terminal equipment and the first identification information of the second terminal equipment to the header of the adaptation layer of the data; and the third terminal equipment transmits the data to the second terminal equipment, wherein the third terminal equipment adds the first identification information of the first terminal equipment to the header of the adaptation layer of the data.

For example, still taking FIG. 11 as an example, a difference from FIG. 11 is that in step 1101, "adding the source local ID and destination local ID to the SRAP header of the data and transmitting the data".

Thus, data reception and transmission may be performed among the source UE, the relay UE and the destination UE.

In some implementations, the third terminal equipment receives the data transmitted by the first terminal equipment, wherein the first terminal equipment adds the first identification information of the first terminal equipment and the first identification information of the second terminal equipment to the header of the adaptation layer of the data; and the third terminal equipment transmits the data to the second terminal equipment, wherein the third terminal equipment adds the first identification information of the first terminal equipment and the first identification information of the second terminal equipment to the header of the adaptation layer of the data.

In some implementations, after receiving the data transmitted by the first terminal equipment, the third terminal equipment determines the second identification information of the second terminal equipment according to the first identification information of the second terminal equipment.

FIG. 12 is another example diagram of data transmission in the embodiments of this disclosure.

Step 1201: the source UE 201 transmits data to the relay UE 203, the data being payloads of the adaptation layer PDU for the relay UE 203, and the source UE 201 adds the source local ID of the source UE 201, such as 8-bit "00000010", and the local ID of the destination UE 202 (destination local ID), such as 8-bit "00000001", to a header of an adaptation layer (SRAP header, or referred to as an ADAPT header) of the data.

For example, in the source UE 201, the data of the application layer are to be transmitted to the destination UE 202, hence, the data of the application layer are associated with the L2 ID of the destination UE 202. When the data reach the adaptation layer, the adaptation layer determines the local ID of the destination UE 202 according to the L2 ID of the destination UE 202. The source UE 201 includes the local ID of the destination UE 202 and the local ID of the source UE 201 in the header of the adaptation layer, hence, the data of the source UE 201 are transmitted to the relay UE 203 after being transmitted via the adaptation layer, the RLC layer, the MAC layer and physical layer. For example, the header of the SRAP PDU transmitted by the source UE 201 includes the local ID of the destination UE 202 and the local ID of the source UE 201, and the header of the transmitted MAC PDU includes high 16 bits of the L2 ID of the source UE 201 and high 8 bits of the L2 ID of the relay UE 203, and the SCI indicates the low 8 bits of the L2 ID of the source UE 201 and the low 16 bits of the L2 ID of the relay UE 203.

Step 1202: the relay UE 203 determines the destination L2 ID of the destination UE 202 according to the destination local ID of the destination UE 202 after receiving the data transmitted by the source UE 201.

For example, the relay UE 203 determines the destination L2 ID according to the destination local ID included in the header of the adaptation layer and its own determined or notified correspondence between destination L2 ID and the destination local ID.

Step 1203: the relay UE 203 adds the source local ID of the source UE 201 and the destination local ID of the destination UE 202 to the header of the adaptation layer when the relay UE 203 transmits the data to the destination UE 202, wherein the relay UE transmits the data to the corresponding destination UE 202.

For example, the relay UE 203 transmits data to the destination UE 202 in the MAC layer and physical layer by using the destination L2 ID (such as the MAC PDU header including the high 8 bits of the destination L2 ID and the SCI including the low 16 bits of the destination L2 ID).

Step 1204: the destination UE 202 learns which source UE transmits data to itself via the source local ID and destination local ID in the adaptation layer when the destination UE 202 receives the data.

Thus, data reception and transmission may be performed among the source UE, the relay UE and the destination UE.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that this disclosure is able to determine the identification information of the first terminal equipment and/or the identification information of the second terminal equipment used in the adaptation layer of the third terminal equipment, and perform data transmission and reception according to the determined identification information of the first terminal equipment and/or identification information of the second terminal equipment. Hence, data transmission overhead in the adaptation layer may be reduced, and radio resources may be saved.

### Embodiments of a second aspect

The embodiments of this disclosure provide a data transmission method, applicable to a first terminal equipment. The embodiments may be implemented in combination with the embodiments of the first aspect or may be implemented separately. Contents in the embodiments identical to those in the embodiments of the first aspect shall not be repeated herein any further.

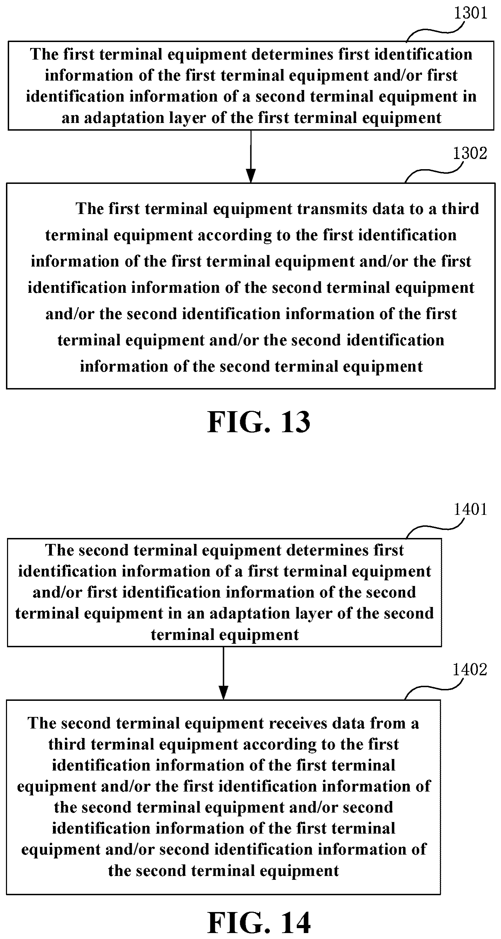

FIG. 13 is a schematic diagram of the data transmission method of the embodiments of this disclosure. As shown in FIG. 13, the method includes:
1301: the first terminal equipment determines first identification information of the first terminal equipment and/or first identification information of a second terminal equipment in an adaptation layer of the first terminal equipment; and
1302: the first terminal equipment transmits data to a third terminal equipment according to the first identification information of the first terminal equipment and/or the first identification information of the second terminal equipment and/or second identification information of the first terminal equipment and/or second identification information of the second terminal equipment.

Thus, the identification information of the first terminal equipment and/or the identification information of the second terminal equipment used in the adaptation layer of the first terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

It should be noted that FIG. 13 only schematically illustrates the embodiments of this disclosure; however, this disclosure is not limited thereto. For example, an order of execution of the operations may be appropriately adjusted, and furthermore, some other operations may be added, or some operations therein may be reduced, and objects of the operations may be adjusted. And appropriate variants may be made by those skilled in the art according to the above contents, without being limited to what is contained in FIG. 13.

In some implementations, the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.

In some implementations, the first terminal equipment transmits the data to the third terminal equipment, wherein the first identification information of the second terminal equipment is added to a header of an adaptation layer of the data; wherein the third terminal equipment transmits the data to the second terminal equipment, wherein the third terminal equipment adds the first identification information of the first terminal equipment to the header of the adaptation layer of the data.

In some implementations, the first terminal equipment transmits the data to the third terminal equipment, wherein the first identification information of the second terminal equipment is added to the header of the adaptation layer of the data; wherein the third terminal equipment transmits the data to the second terminal equipment, wherein the third terminal equipment adds the first identification information of the first terminal equipment and the first identification information of the second terminal equipment to the header of the adaptation layer of the data.

In some implementations, the first terminal equipment transmits the data to the third terminal equipment, wherein the first identification information of the first terminal equipment and the first identification information of the second terminal equipment are added to the header of the adaptation layer of the data; wherein the third terminal equipment transmits the data to the second terminal equipment, wherein the third terminal equipment adds the first identification information of the first terminal equipment to the header of the adaptation layer of the data.

In some implementations, the first terminal equipment transmits the data to the third terminal equipment, wherein the first identification information of the first terminal equipment and the first identification information of the second terminal equipment are added to the header of the adaptation layer of the data; wherein the third terminal equipment transmits the data to the second terminal equipment, wherein the third terminal equipment adds the first identification information of the first terminal equipment and the first identification information of the second terminal equipment to the header of the adaptation layer of the data.

For example, the first identification information of the first terminal equipment and/or the first identification information of the second terminal equipment is/are determined in the assignment manner of the embodiments of the first aspect (such as those described in FIG. 4-FIG.10, etc.), and a mode of data transmission among the first terminal equipment, the second terminal equipment and the third terminal equipment is determined in the mode of data transmission and forwarding of the embodiments of the first aspect (such as those described in FIG. 11-FIG.12, etc.), which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that the identification information of the first terminal equipment and/or the identification information of the second terminal equipment used in the adaptation layer of the first terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

### Embodiments of a third aspect

The embodiments of this disclosure provide a data reception method, applicable to a second terminal equipment. The embodiments may be implemented in combination with the embodiments of the first and second aspects or may be implemented separately. Contents in the embodiments identical to those in the embodiments of the first and second aspects shall not be repeated herein any further.

FIG. 14 is a schematic diagram of the data reception method of the embodiments of this disclosure. As shown in FIG. 14, the method includes:
1401: the second terminal equipment determines first identification information of a first terminal equipment and/or first identification information of the second terminal equipment in an adaptation layer of the second terminal equipment; and
1402: the second terminal equipment receives data from a third terminal equipment according to the first identification information of the first terminal equipment and/or the first identification information of the second terminal equipment and/or second identification information of the first terminal equipment and/or second identification information of the second terminal equipment.

Thus, the identification information of the first terminal equipment and/or the identification information of the second terminal equipment used in an adaptation layer of the second terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

It should be noted that FIG. 14 only schematically illustrates the embodiments of this disclosure; however, this disclosure is not limited thereto. For example, an order of execution of the operations may be appropriately adjusted, and furthermore, some other operations may be added, or some operations therein may be reduced, and objects of the operations may be adjusted. And appropriate variants may be made by those skilled in the art according to the above contents, without being limited to what is contained in FIG. 14.

In some implementations, the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.

In some implementations, the second terminal equipment receives the data transmitted by the third terminal equipment, wherein the first terminal equipment adds the first identification information of the second terminal equipment to a header of an adaptation layer of the data and transmits the data to the third terminal equipment, and the third terminal equipment adds the first identification information of the first terminal equipment to the header of the adaptation layer of the data and transmits the data.

In some implementations, the second terminal equipment receives the data transmitted by the third terminal equipment, wherein the first terminal equipment adds the first identification information of the second terminal equipment in the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.

In some implementations, the second terminal equipment receives the data transmitted by the third terminal equipment, wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment to the header of the adaptation layer of the data and transmits the data.

In some implementations, the second terminal equipment receives the data transmitted by the third terminal equipment, wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

For example, the first identification information of the first terminal equipment and/or the first identification information of the second terminal equipment is/are determined in the assignment manner of the embodiments of the first aspect (such as those described in FIG. 4- FIG. 10, etc.), and a mode of data transmission among the first terminal equipment, the second terminal equipment and the third terminal equipment is determined in the mode of data transmission and forwarding of the embodiments of the first aspect (such as those described in FIG. 11- FIG.12, etc.), which shall not be repeated herein any further.

It can be seen from the above embodiments that the identification information of the first terminal equipment and/or the identification information of the second terminal equipment used in the adaptation layer of the second terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

### Embodiments of a fourth aspect

The embodiments of this disclosure provide a data reception and transmission apparatus, configured in a third terminal equipment. The apparatus may be, for example, a terminal equipment, or one or some components or assemblies configured in the terminal equipment. Contents in the embodiments identical to those in the embodiments of the first aspect shall not be described herein any further.

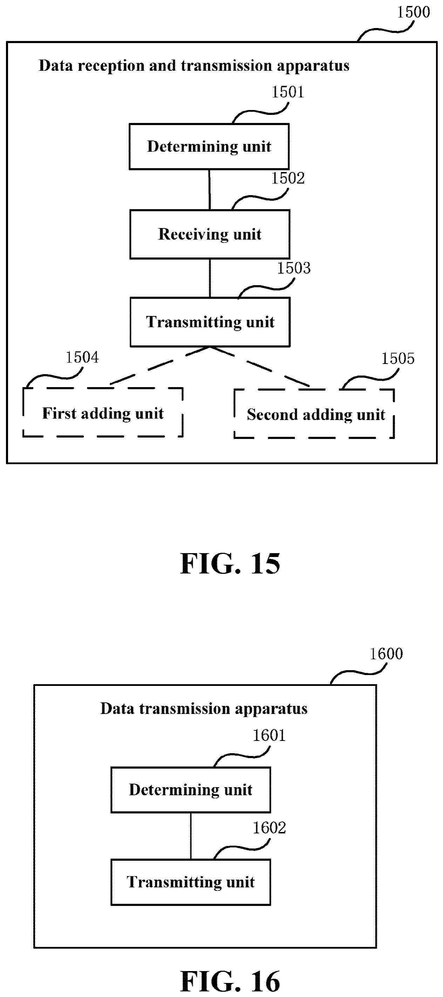

FIG. 15 is a schematic diagram of the data reception and transmission apparatus of the embodiments of this disclosure. As shown in FIG. 15, the data reception and transmission apparatus 1500 includes:
a determining unit 1501 configured to determine first identification information of a first terminal equipment and/or first identification information of a second terminal equipment in an adaptation layer of the third terminal equipment;
a receiving unit 1502 configured to receive data from the first terminal equipment; and
a transmitting unit 1503 configured to transmit data to the second terminal equipment according to the first identification information of the first terminal equipment and/or the first identification information of the second terminal equipment and/or second identification information of the first terminal equipment and/or second identification information of the second terminal equipment.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception and transmission apparatus 1500 may further include other components or modules, and reference may be made to related techniques for particulars of these components or modules.

Furthermore, for the sake of simplicity, connection relationships between the components or modules or signal profiles thereof are only illustrated in FIG. 15. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

In some implementations, the determining unit 1501 determines the first identification information of the first terminal equipment and/or the first identification information of the second terminal equipment according to at least one of the following assignments: a first terminal equipment assignment; a second terminal equipment assignment; a third terminal equipment assignment; and a network device assignment, or preconfiguration.

In some implementations, the determining unit 1501 further includes a first transmitting module (not shown in FIG. 15), wherein the first transmitting module transmits the first identification information of the first terminal equipment and/or the first identification information of the second terminal equipment to the first terminal equipment, and the first transmitting module transmits the first identification information of the first terminal equipment and/or the first identification information of the second terminal equipment to the second terminal equipment; or, the first transmitting module transmits the first identification information of the second terminal equipment and the second identification information of the second terminal equipment to the first terminal equipment; and/or, the first transmitting module transmits the first identification information of the first terminal equipment and the second identification information of the first terminal equipment to the second terminal equipment.

In some implementations, the determining unit 1501 further includes a first receiving module and/or a second transmitting module (not shown in FIG. 15), and in case of the first terminal equipment assignment, the first receiving module receives the first identification information of the first terminal equipment, and/or, the first identification information of the second terminal equipment and the second identification information of the second terminal equipment, transmitted by the first terminal equipment; and the second transmitting module transmits the first identification information of the first terminal equipment and/or the first identification information of the second terminal equipment to the second terminal equipment; or, the first receiving module receives the first identification information of the first terminal equipment, and/or, the first identification information of the second terminal equipment and the second identification information of the second terminal equipment, transmitted by the first terminal equipment; wherein the first terminal equipment further transmits the first identification information of the first terminal equipment, and/or, the first identification information of the second terminal equipment to the second terminal equipment.

In some implementations, the determining unit 1501 further includes a second receiving module and/or a third transmitting module (not shown in FIG. 15), and in case of the second terminal equipment assignment, the second receiving module receives the first identification information of the second terminal equipment, and/or, the first identification information of the first terminal equipment and the second identification information of the first terminal equipment transmitted by the second terminal equipment; and the third transmitting module transmits the first identification information of the second terminal equipment and/or the first identification information of the first terminal equipment to the first terminal equipment; or, the second receiving module receives the first identification information of the second terminal equipment, and/or, the first identification information of the first terminal equipment and the second identification information of the first terminal equipment, transmitted by the second terminal equipment; wherein the second terminal equipment further transmits the first identification information of the second terminal equipment and/or the first identification information of the first terminal equipment to the first terminal equipment.

In some implementations, the determining unit 1501 further includes a third receiving module and/or a fourth transmitting module (not shown in FIG. 15), and in case of the network device assignment, the third receiving module receives the first identification information of the first terminal equipment and the first identification information of the second terminal equipment, and/or the second identification information of the first terminal equipment, and/or the second identification information of the second terminal equipment, transmitted by the network device; and the fourth transmitting module transmits the first identification information of the first terminal equipment and/or the second identification information of the first terminal equipment and/or the first identification information of the second terminal equipment and/or the second identification information of the second terminal equipment to the first terminal equipment; and/or, the fourth transmitting module transmits the first identification information of the first terminal equipment and/or the second identification information of the first terminal equipment and/or the first identification information of the second terminal equipment and/or the second identification information of the second terminal equipment to the second terminal equipment.

In some implementations, the determining unit 1501 determines the first identification information of the first terminal equipment and the first identification information of the second terminal equipment, and/or, the second identification information of the first terminal equipment, and/or, the second identification information of the second terminal equipment, according to first preconfiguration information.

In some implementations, the determining unit 1501 further includes a fifth transmitting module (not shown in FIG. 15), and in case of the preconfiguration, the fifth transmitting module transmits the first identification information of the first terminal equipment and/or the second identification information of the first terminal equipment and/or the first identification information of the second terminal equipment and/or the second identification information of the second terminal equipment to the first terminal equipment; and/or, the fifth transmitting module transmits the first identification information of the first terminal equipment and/or the second identification information of the first terminal equipment and/or the first identification information of the second terminal equipment and/or the second identification information of the second terminal equipment to the second terminal equipment.

In some implementations, the first transmitting module transmits the first identification information of the first terminal equipment and/or the first identification information of the second terminal equipment to the first terminal equipment, and transmits the first identification information of the first terminal equipment and/or the first identification information of the second terminal equipment to the second terminal equipment via first signaling or second signaling; or, the first transmitting module transmits the first identification information of the second terminal equipment and the second identification information of the second terminal equipment to the first terminal equipment, and/or, transmits the first identification information of the first terminal equipment and the second identification information of the first terminal equipment to the second terminal equipment via first signaling or second signaling.

In some implementations, the first signaling is PC5-S signaling, and includes at least one of the following signaling: a direct communication request and/or direct communication accept; a discovery message (such as a discovery solicitation) and/or a discovery response message (such as a discovery response); or, other PC5-S messages.

In some implementations, the second signaling is PC5-RRC signaling, and includes at least one of the following signaling: sidelink RRC reconfiguration information (RRCReconfigurationSidelink), sidelink RRC reconfiguration complete information (RRCReconfigurationCompleteSidelink), sidelink UE capacity enquiry information (UECapacityEnquirySidelink), sidelink UE capacity information (UECapacityInformationSidelink), sidelink master information block (MasterInformationBlockSidelink), sidelink UE assistance information (UEAssistanceInformationSidelink), sidelink remote UE information (RemoteUEInformationSidelink), or, sidelink notification message (NotificationMessageSidelink).

In some implementations, the data reception and transmission apparatus 1500 further includes a first adding unit 1504, and the receiving unit 1502 receives data from the first terminal equipment, wherein the first terminal equipment adds the first identification information of the second terminal equipment to a header of an adaptation layer of the data, and after the first adding unit 1504 adds the first identification information of the first terminal equipment to the header of the adaptation layer of the data, the transmitting unit 1503 transmits the data to the second terminal equipment; or, the receiving unit 1502 receives the data from the first terminal equipment, wherein the first terminal equipment adds the first identification information of the second terminal equipment to the header of the adaptation layer of the data, and after the first adding unit 1504 adds the first identification information of the first terminal equipment and the first identification information of the second terminal equipment to the header of the adaptation layer of the data, the transmitting unit 1503 transmits the data to the second terminal equipment; or, the receiving unit 1502 receives the data from the first terminal equipment, wherein the first terminal equipment adds the first identification information of the first terminal equipment and the first identification information of the second terminal equipment to the header of the adaptation layer of the data, and after the first adding unit 1504 adds the first identification information of the first terminal equipment to the header of the adaptation layer of the data, the transmitting unit 1503 transmits the data to the second terminal equipment.

In some implementations, after the receiving unit 1502 receives the data from the first terminal equipment, the determining unit 1501 determines the first identification information of the first terminal equipment according to the second identification information of the first terminal equipment, and/or determines the second identification information of the second terminal equipment according to the first identification information of the second terminal equipment.

In some implementations, the data reception and transmission apparatus 1500 further includes a second adding unit 1505, the receiving unit 1502 receives the data from the first terminal equipment, wherein the first terminal equipment adds the first identification information of the first terminal equipment and the first identification information of the second terminal equipment to the header of the adaptation layer of the data; and after the second adding unit 1505 adds the first identification information of the first terminal equipment and the first identification information of the second terminal equipment to the header of the adaptation layer of the data, the transmitting unit 1503 transmits the data to the second terminal equipment.

In some implementations, after the receiving unit 1502 receives the data transmitted by the first terminal equipment, the determining unit 1501 determines the second identification information of the second terminal equipment according to the first identification information of the second terminal equipment.

In some implementations, the first terminal equipment is a source remote device, the second terminal equipment is a destination remote device, and the third terminal equipment is a relay device.

In some implementations, the first identification information is an identifier of a terminal equipment used in an adaptation layer, and the second identification information is a layer 2 identifier (L2 ID).

For example, the first identification information of the first terminal equipment and/or the first identification information of the second terminal equipment is/are determined in the assignment manner of the embodiments of the first aspect (such as those described in FIG. 4-FIG. 10, etc.), and a mode of data transmission among the first terminal equipment, the second terminal equipment and the third terminal equipment is determined in the mode of data transmission and forwarding of the embodiments of the first aspect (such as those described in FIG. 11-FIG. 12, etc.), which shall not be repeated herein any further.

It can be seen from the above embodiments that the identification information of the first terminal equipment and/or the identification information of the second terminal equipment used in the adaptation layer of the third terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

### Embodiments of a fifth aspect

The embodiments of this disclosure provide a data transmission apparatus, configured in a third terminal equipment. The apparatus may be, for example, a terminal equipment, or one or some components or assemblies configured in the terminal equipment. Contents in the embodiments identical to those in the embodiments of the first and second aspects shall not be described herein any further.

FIG. 16 is a schematic diagram of the data transmission apparatus of the embodiments of this disclosure. As shown in FIG. 16, the data transmission apparatus 1600 includes:
a determining unit 1601 configured to determine first identification information of the first terminal equipment and/or first identification information of a second terminal equipment in an adaptation layer of the first terminal equipment; and
a transmitting unit 1602 configured to transmit data to a third terminal equipment according to the first identification information of the first terminal equipment and/or the first identification information of the second terminal equipment and/or second identification information of the first terminal equipment and/or second identification information of the second terminal equipment.

Thus, the identification information of the first terminal equipment and/or the identification information of the second terminal equipment used in the adaptation layer of the first terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data transmission apparatus 1600 may further include other components or modules, and reference may be made to related techniques for particulars of these components or modules.

Furthermore, for the sake of simplicity, connection relationships between the components or modules or signal profiles thereof are only illustrated in FIG. 16. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

In some implementations, the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.

In some implementations, the transmitting unit 1602 transmits the data to the third terminal equipment, wherein the first identification information of the second terminal equipment is added to a header of an adaptation layer of the data; wherein the third terminal equipment transmits the data to the second terminal equipment, wherein the third terminal equipment adds the first identification information of the first terminal equipment to the header of the adaptation layer of the data.

In some implementations, the transmitting unit 1602 transmits the data to the third terminal equipment, wherein the first identification information of the second terminal equipment is added to the header of the adaptation layer of the data; wherein the third terminal equipment transmits the data to the second terminal equipment, wherein the third terminal equipment adds the first identification information of the first terminal equipment and the first identification information of the second terminal equipment to the header of the adaptation layer of the data.

In some implementations, the transmitting unit 1602 transmits the data to the third terminal equipment, wherein the first identification information of the first terminal equipment and the first identification information of the second terminal equipment are added to the header of the adaptation layer of the data; wherein the third terminal equipment transmits the data to the second terminal equipment, wherein the third terminal equipment adds the first identification information of the first terminal equipment to the header of the adaptation layer of the data.

In some implementations, the transmitting unit 1602 transmits the data to the third terminal equipment, wherein the first identification information of the first terminal equipment and the first identification information of the second terminal equipment are added to the header of the adaptation layer of the data; wherein the third terminal equipment transmits the data to the second terminal equipment, wherein the third terminal equipment adds the first identification information of the first terminal equipment and the first identification information of the second terminal equipment to the header of the adaptation layer of the data.

For example, the first identification information of the first terminal equipment and/or the first identification information of the second terminal equipment is/are determined in the assignment manner of the embodiments of the first aspect (such as those described in FIG. 4- FIG. 10, etc.), and a mode of data transmission among the first terminal equipment, the second terminal equipment and the third terminal equipment is determined in the mode of data transmission and forwarding of the embodiments of the first aspect (such as those described in FIG. 11- FIG.12, etc.), which shall not be repeated herein any further.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It can be seen from the above embodiments that the identification information of the first terminal equipment and/or the identification information of the second terminal equipment used in the adaptation layer of the first terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

### Embodiments of a sixth aspect

The embodiments of this disclosure provide a data reception apparatus, configured in a second terminal equipment. The apparatus may be, for example, a terminal equipment, or one or some components or assemblies configured in the terminal equipment. Contents in the embodiments identical to those in the embodiments of the first, second and third aspects shall not be described herein any further.

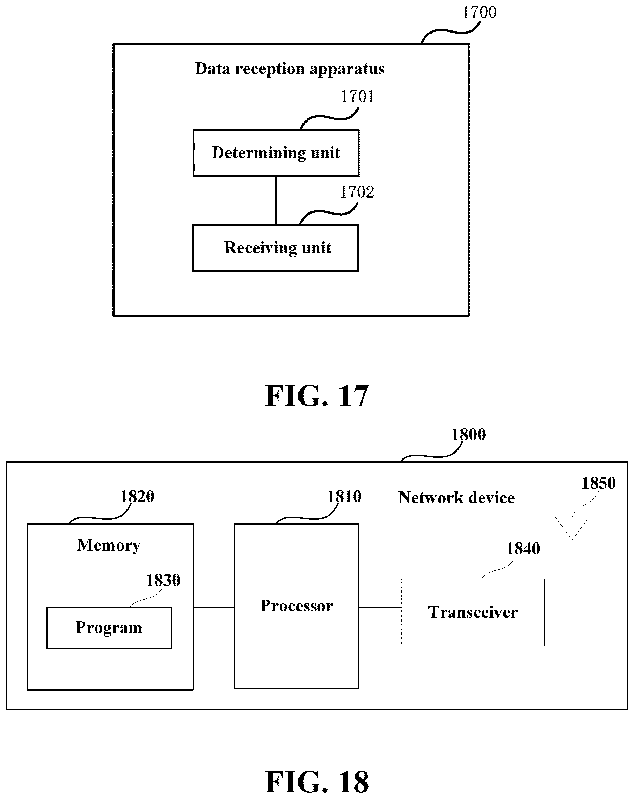

FIG. 17 is a schematic diagram of the data reception apparatus of the embodiments of this disclosure. As shown in FIG. 17, the data reception apparatus 1700 includes:
a determining unit 1701 configured to determine first identification information of a first terminal equipment and/or first identification information of the second terminal equipment in an adaptation layer of the second terminal equipment; and
a receiving unit 1702 configured to receive data from a third terminal equipment according to the first identification information of the first terminal equipment and/or the first identification information of the second terminal equipment and/or second identification information of the first terminal equipment and/or second identification information of the second terminal equipment.

Thus, the identification information of the first terminal equipment and/or the identification information of the second terminal equipment used in an adaptation layer of the second terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

It should be noted that the components or modules related to this disclosure are only described above. However, this disclosure is not limited thereto, and the data reception apparatus 1700 may further include other components or modules, and reference may be made to related techniques for particulars of these components or modules.

Furthermore, for the sake of simplicity, connection relationships between the components or modules or signal profiles thereof are only illustrated in FIG. 17. However, it should be understood by those skilled in the art that such related techniques as bus connection, etc., may be adopted. And the above components or modules may be implemented by hardware, such as a processor, a memory, a transmitter, and a receiver, etc., which are not limited in the embodiments of this disclosure.

In some implementations, the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.

In some implementations, the receiving unit 1702 receives the data transmitted by the third terminal equipment, wherein the first terminal equipment adds the first identification information of the second terminal equipment to a header of an adaptation layer of the data and transmits the data to the third terminal equipment, and the third terminal equipment adds the first identification information of the first terminal equipment to the header of the adaptation layer of the data and transmits the data.

In some implementations, the receiving unit 1702 receives the data transmitted by the third terminal equipment, wherein the first terminal equipment adds the first identification information of the second terminal equipment in the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.

In some implementations, the receiving unit 1702 receives the data transmitted by the third terminal equipment, wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment to the header of the adaptation layer of the data and transmits the data.

In some implementations, the receiving unit 1702 receives the data transmitted by the third terminal equipment, wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.

The above implementations only illustrate the embodiments of this disclosure. However, this disclosure is not limited thereto, and appropriate variants may be made on the basis of these implementations. For example, the above implementations may be executed separately, or one or more of them may be executed in a combined manner.

For example, the first identification information of the first terminal equipment and/or the first identification information of the second terminal equipment is/are determined in the assignment manner of the embodiments of the first aspect (such as those described in FIG. 4- FIG.10, etc.), and a mode of data transmission among the first terminal equipment, the second terminal equipment and the third terminal equipment is determined in the mode of data transmission and forwarding of the embodiments of the first aspect (such as those described in FIG. 11- FIG.12, etc.), which shall not be repeated herein any further.

It can be seen from the above embodiment that the identification information of the first terminal equipment and/or the identification information of the second terminal equipment used in the adaptation layer of the second terminal equipment may be determined, and data transmission and reception may be performed according to the determined identification information of the first terminal equipment and/or identification information of the second terminal equipment. Hence, data transmission overhead in the adaptation layer may be reduced, and radio resources may be saved.

### Embodiments of a seventh aspect

The embodiments of this disclosure provide a communication system, with contents identical to those in the embodiments of the first to the sixth aspects being not going to be described herein any further.

In some embodiments, the communication system may at least include:
a first terminal equipment configured to determine first identification information of the first terminal equipment and/or first identification information of a second terminal equipment in an adaptation layer, and transmit data to a third terminal equipment;
the third terminal equipment configured to receive the data from the first terminal equipment, determine the first identification information of the first terminal equipment and/or the first identification information of the second terminal equipment in the adaptation layer, and transmit the data to the second terminal equipment according to the first identification information of the first terminal equipment and/or the first identification information of the second terminal equipment and/or second identification information of the first terminal equipment and/or second identification information of the second terminal equipment; and
the second terminal equipment configured to determine the first identification information of the first terminal equipment and/or the first identification information of the second terminal equipment in the adaptation layer, and receive the data from the third terminal equipment according to the first identification information of the first terminal equipment and/or the first identification information of the second terminal equipment and/or the second identification information of the first terminal equipment and/or the second identification information of the second terminal equipment.

The embodiments of this disclosure further provide a network device, which may be, for example, a base station. However, this disclosure is not limited thereto, and it may also be another network device.

FIG. 18 is a schematic diagram of a structure of the network device of the embodiments of this disclosure. As shown in FIG. 18, the network device 1800 may include a processor 1810 (such as a central processing unit (CPU)) and a memory 1820, the memory 1820 being coupled to the processor 1810. Wherein, the memory 1820 may store various data, and furthermore, it may store a program1830 for information processing, and execute the program 1830 under control of the processor 1810.

Furthermore, as shown in FIG. 18, the network device 1800 may include a transceiver 1840, and an antenna 1850, etc. Wherein, functions of the above components are similar to those in the relevant art, and shall not be described herein any further. It should be noted that the network device 1800 does not necessarily include all the parts shown in FIG. 18, and furthermore, the network device 1800 may include parts not shown in FIG. 18, and the relevant art may be referred to.

The embodiments of this disclosure further provide a terminal equipment; however, this disclosure is not limited thereto, and it may also be another equipment.

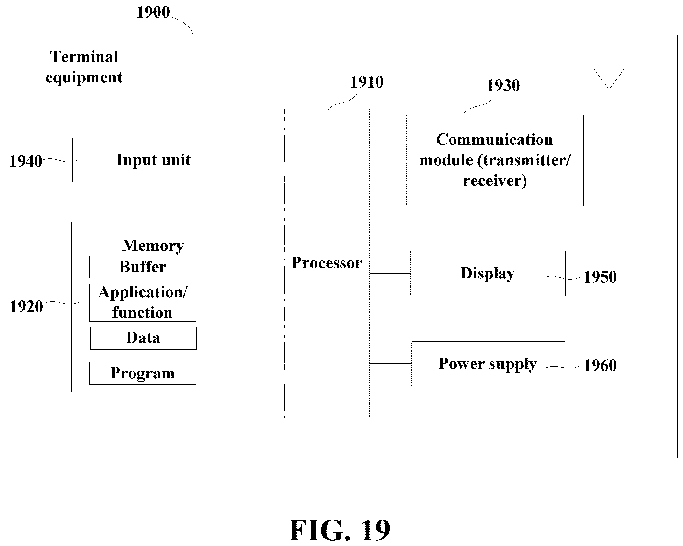

FIG. 19 is a schematic diagram of the terminal equipment of the embodiments of this disclosure. As shown in FIG. 19, the terminal equipment 1900 may include a processor 1910 and a memory 1920, the memory 1920 storing data and a program and being coupled to the processor 1910. It should be noted that this figure is illustrative only, and other types of structures may also be used, so as to supplement or replace this structure and achieve a telecommunications function or other functions.

For example, the processor 1910 may be configured to execute a program to carry out the data reception and transmission method as described in the embodiments of the first aspect. For example, the processor 1901 may be configured to execute the following control: determining first identification information of a first terminal equipment and/or first identification information of a second terminal equipment in an adaptation layer of a third terminal equipment; receiving data from the first terminal equipment; and transmitting data to the second terminal equipment according to the first identification information of the first terminal equipment and/or the first identification information of the second terminal equipment and/or second identification information of the first terminal equipment and/or second identification information of the second terminal equipment

As shown in FIG. 19, the terminal equipment 1900 may further include a communication module 1930, an input unit 1940, a display 1950, and a power supply 1960; wherein functions of the above components are similar to those in the relevant art, which shall not be described herein any further. It should be noted that the terminal equipment 1900 does not necessarily include all the parts shown in FIG. 19, and the above components are not necessary. Furthermore, the terminal equipment 1900 may include parts not shown in FIG. 19, and the relevant art may be referred to.

Embodiments of this disclosure provide a computer program, which, when executed in a terminal equipment, will cause the terminal equipment to carry out the data reception and transmission method as described in the embodiments of the first aspect.

Embodiments of this disclosure provide a computer storage medium, including a computer program, which will cause a terminal equipment to carry out the data reception and transmission method as described in the embodiments of the first aspect.

Embodiments of this disclosure provide a computer program, which, when executed in a terminal equipment, will cause the terminal equipment to carry out the data transmission method as described in the embodiments of the second aspect.

Embodiments of this disclosure provide a computer storage medium, including a computer program, which will cause a terminal equipment to carry out the data transmission method as described in the embodiments of the second aspect.

Embodiment of this disclosure provide a computer program, which, when executed in a terminal equipment, will cause the terminal equipment to carry out the data reception method as described in the embodiments of the third aspect.

Embodiment of this disclosure provide a computer storage medium, including a computer program, which will cause a terminal equipment to carry out the data reception method as described in the embodiments of the third aspect.

The above apparatuses and methods of this disclosure may be implemented by hardware, or by hardware in combination with software. This disclosure relates to such a computer-readable program that when the program is executed by a logic device, the logic device is enabled to carry out the apparatus or components as described above, or to carry out the methods or steps as described above. This disclosure also relates to a storage medium for storing the above program, such as a hard disk, a floppy disk, a CD, a DVD, and a flash memory, etc.

The methods/apparatuses described with reference to the embodiments of this disclosure may be directly embodied as hardware, software modules executed by a processor, or a combination thereof. For example, one or more functional block diagrams and/or one or more combinations of the functional block diagrams shown in the drawings may either correspond to software modules of procedures of a computer program, or correspond to hardware modules. Such software modules may respectively correspond to the steps shown in the drawings. And the hardware module, for example, may be carried out by firming the soft modules by using a field programmable gate array (FPGA).

The soft modules may be located in an RAM, a flash memory, an ROM, an EPROM, and EEPROM, a register, a hard disc, a floppy disc, a CD-ROM, or any memory medium in other forms known in the art. A memory medium may be coupled to a processor, so that the processor may be able to read information from the memory medium, and write information into the memory medium; or the memory medium may be a component of the processor. The processor and the memory medium may be located in an ASIC. The soft modules may be stored in a memory of a mobile termination, and may also be stored in a memory card of a pluggable mobile termination. For example, if equipment (such as a mobile termination) employs an MEGA-SIM card of a relatively large capacity or a flash memory device of a large capacity, the soft modules may be stored in the MEGA-SIM card or the flash memory device of a large capacity.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof carrying out the functions described in this application. And the one or more functional block diagrams and/or one or more combinations of the functional block diagrams in the drawings may also be realized as a combination of computing equipment, such as a combination of a DSP and a microprocessor, multiple processors, one or more microprocessors in communication combination with a DSP, or any other such configuration.

This disclosure is described above with reference to particular embodiments. However, it should be understood by those skilled in the art that such a description is illustrative only, and not intended to limit the protection scope of the present disclosure. Various variants and modifications may be made by those skilled in the art according to the spirits and principle of the present disclosure, and such variants and modifications fall within the scope of the present disclosure.

As to implementations containing the above embodiments, following supplements are further disclosed.
1. A data reception and transmission apparatus, applicable to a third terminal equipment, wherein the method includes:
   determining first identification information of a first terminal equipment and/or first identification information of a second terminal equipment in an adaptation layer of the third terminal equipment;
   receiving data from the first terminal equipment; and
   transmitting data to the second terminal equipment according to the first identification information of the first terminal equipment and/or the first identification information of the second terminal equipment and/or second identification information of the first terminal equipment and/or second identification information of the second terminal equipment.
2. The method according to supplement 1, wherein the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.
3. The method according to supplement 2, wherein that the third terminal equipment assigns the first identification information of the first terminal equipment and/or the first identification information of the second terminal equipment includes:
   transmitting the first identification information of the first terminal equipment and/or the first identification information of the second terminal equipment to the first terminal equipment; and
   transmitting the first identification information of the first terminal equipment and/or the first identification information of the second terminal equipment to the second terminal equipment.
4. The method according to supplement 2, wherein that the third terminal equipment assigns the first identification information of the first terminal equipment and/or the first identification information of the second terminal equipment includes:
   transmitting the first identification information of the second terminal equipment and the second identification information of the second terminal equipment to the first terminal equipment; and/or,
   transmitting the first identification information of the first terminal equipment and the second identification information of the first terminal equipment to the second terminal equipment.
5. The method according to supplement 2, wherein that the first terminal equipment assigns the first identification information of the first terminal equipment and/or the first identification information of the second terminal equipment includes:
   receiving the first identification information of the first terminal equipment, and/or, the first identification information of the second terminal equipment and the second identification information of the second terminal equipment transmitted by the first terminal equipment; and
   transmitting the first identification information of the first terminal equipment and/or the first identification information of the second terminal equipment to the second terminal equipment.
6. The method according to supplement 2, wherein that the first terminal equipment assigns the first identification information of the first terminal equipment and/or the first identification information of the second terminal equipment includes:
   receiving the first identification information of the first terminal equipment, and/or, the first identification information of the second terminal equipment and the second identification information of the second terminal equipment transmitted by the first terminal equipment, wherein the first terminal equipment further transmits the first identification information of the first terminal equipment and/or the first identification information of the second terminal equipment to the second terminal equipment.
7. The method according to supplement 2, wherein that the second terminal equipment assigns the first identification information of the first terminal equipment and/or the first identification information of the second terminal equipment includes:
   receiving the first identification information of the second terminal equipment, and/or,, the first identification information of the first terminal equipment and the second identification information of the first terminal equipment transmitted by the second terminal equipment; and
   transmitting the first identification information of the second terminal equipment and/or the first identification information of the first terminal equipment to the first terminal equipment.
8. The method according to supplement 2, wherein that the second terminal equipment assigns the first identification information of the first terminal equipment and/or the first identification information of the second terminal equipment includes:
   receiving the first identification information of the second terminal equipment, and/or, the first identification information of the first terminal equipment and the second identification information of the first terminal equipment transmitted by the second terminal equipment; wherein the second terminal equipment further transmits the first identification information of the second terminal equipment and/or the first identification information of the first terminal equipment to the first terminal equipment.
9. The method according to supplement 2, wherein that the network device assigns the first identification information of the first terminal equipment and/or the first identification information of the second terminal equipment includes:
   receiving the first identification information of the first terminal equipment and the first identification information of the second terminal equipment, and/or the second identification information of the first terminal equipment, and/or the second identification information of the second terminal equipment, transmitted by the network device.
10. The method according to supplement 9, wherein that the network device assigns the first identification information of the first terminal equipment and/or the first identification information of the second terminal equipment further includes:
   transmitting the first identification information of the first terminal equipment and/or the second identification information of the first terminal equipment and/or the first identification information of the second terminal equipment and/or the second identification information of the second terminal equipment to the first terminal equipment; and/or,
   transmitting the first identification information of the first terminal equipment and/or the second identification information of the first terminal equipment and/or the first identification information of the second terminal equipment and/or the second identification information of the second terminal equipment to the second terminal equipment.
11. The method according to supplement 2, wherein the preconfiguring the first identification information of the first terminal equipment and/or the first identification information of the second terminal equipment includes:
   determining the first identification information of the first terminal equipment and the first identification information of the second terminal equipment, and/or the second identification information of the first terminal equipment, and/or the second identification information of the second terminal equipment, according to first preconfiguration information.
12. The method according to supplement 11, wherein the preconfiguring the first identification information of the first terminal equipment and/or the first identification information of the second terminal equipment further includes:
   transmitting the first identification information of the first terminal equipment and/or the second identification information of the first terminal equipment and/or the first identification information of the second terminal equipment and/or the second identification information of the second terminal equipment to the first terminal equipment; and/or,
   transmitting the first identification information of the first terminal equipment and/or the second identification information of the first terminal equipment and/or the first identification information of the second terminal equipment and/or the second identification information of the second terminal equipment to the second terminal equipment.
13. The method according to any one of supplements 1-10, wherein the method further includes:
   transmitting the first identification information of the first terminal equipment and/or the second identification information of the first terminal and/or the first identification information of the second terminal equipment and/or the second identification information of the second terminal equipment via first signaling or second signaling to the first terminal equipment and/or the second terminal equipment.
14. The method according to supplement 13, wherein the first signaling is PC5-S signaling, and includes at least one of the following signaling:
   a direct communication request and/or direct communication accept;
   a discovery message (such as a discovery solicitation) and/or a discovery response message (such as a discovery response); or
   other PC5-S messages.
15. The method according to supplement 13, wherein the second signaling is PC5-RRC signaling, and includes at least one of the following signaling:
   sidelink RRC reconfiguration information (RRCReconfigurationSidelink),
   sidelink RRC reconfiguration complete information (RRCReconfigurationCompleteSidelink),
   sidelink UE capacity enquiry information (UECapacityEnquirySidelink),
   sidelink UE capacity information (UECapacityInformationSidelink),
   sidelink master information block (MasterInformationBlockSidelink),
   sidelink UE assistance information (UEAssistanceInformationSidelink),
   sidelink remote UE information (RemoteUEInformationSidelink), or
   sidelink notification message (NotificationMessageSidelink).
16. The method according to supplement 1, wherein the receiving data from the first terminal equipment and/or transmitting data to the second terminal equipment according to the first identification information of the first terminal equipment and/or the first identification information of the second terminal equipment and/or second identification information of the first terminal equipment and/or second identification information of the second terminal equipment include(s):
   receiving data from the first terminal equipment, wherein the first terminal equipment adds the first identification information of the second terminal equipment to a header of an adaptation layer of the data; and
   transmitting the data to the second terminal equipment, wherein the first identification information of the first terminal equipment is added to the header of the adaptation layer of the data.
17. The method according to supplement 1, wherein the receiving data from the first terminal equipment and/or transmitting data to the second terminal equipment according to the first identification information of the first terminal equipment and/or the first identification information of the second terminal equipment and/or second identification information of the first terminal equipment and/or second identification information of the second terminal equipment include(s):
   receiving data from the first terminal equipment, wherein the first terminal equipment adds the first identification information of the second terminal equipment to a header of an adaptation layer of the data; and
   transmitting the data to the second terminal equipment, wherein the first identification information of the first terminal equipment and the first identification information of the second terminal equipment are added to the header of the adaptation layer of the data.
18. The method according to supplement 1, wherein the receiving data from the first terminal equipment and/or transmitting data to the second terminal equipment according to the first identification information of the first terminal equipment and/or the first identification information of the second terminal equipment and/or second identification information of the first terminal equipment and/or second identification information of the second terminal equipment include(s):
   receiving data transmitted by the first terminal equipment, wherein the first terminal equipment adds the first identification information of the first terminal equipment and the first identification information of the second terminal equipment to a header of an adaptation layer of the data; and
   transmitting the data to the second terminal equipment, wherein the first identification information of the first terminal equipment is added to the header of the adaptation layer of the data.
19. The method according to any one of supplements 16-18, wherein the method further includes:
   after receiving the data transmitted by the first terminal equipment, determining the first identification information of the first terminal equipment according to the second identification information of the first terminal equipment, and/or determining the second identification information of the second terminal equipment according to the first identification information of the second terminal equipment.
20. The method according to supplement 1, wherein the receiving data from the first terminal equipment and/or transmitting data to the second terminal equipment according to the first identification information of the first terminal equipment and/or the first identification information of the second terminal equipment and/or second identification information of the first terminal equipment and/or second identification information of the second terminal equipment include(s):
   receiving the data transmitted by the first terminal equipment, wherein the first terminal equipment adds the first identification information of the first terminal equipment and the first identification information of the second terminal equipment to the header of the adaptation layer of the data; and
   transmitting the data to the second terminal equipment, wherein the first identification information of the first terminal equipment and the first identification information of the second terminal equipment are added to the header of the adaptation layer of the data.
21. The method according to supplement 20, wherein the method further includes:
   after receiving the data transmitted by the first terminal equipment, determining the second identification information of the second terminal equipment according to the first identification information of the second terminal equipment.
22. The method according to any one of supplements 1-21, wherein,
   the first terminal equipment is a source remote device, the second terminal equipment is a destination remote device, and the third terminal equipment is a relay device.
23. The method according to any one of supplements 1-22, wherein,
   the first identification information is an identifier of a terminal equipment used in an adaptation layer, and the second identification information is a layer 2 identifier (L2 ID).
24. A data transmission method, applicable to a first terminal equipment, wherein the method includes:
   determining first identification information of the first terminal equipment and/or first identification information of a second terminal equipment in an adaptation layer of the first terminal equipment; and
   transmitting data to a third terminal equipment according to the first identification information of the first terminal equipment and/or the first identification information of the second terminal equipment and/or second identification information of the first terminal equipment and/or second identification information of the second terminal equipment.
25. The method according to supplement 24, wherein the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.
26. The method according to supplement 24, wherein the transmitting data according to the first identification information of the first terminal equipment and/or the first identification information of the second terminal equipment includes:
   transmitting the data to the third terminal equipment, wherein the first identification information of the second terminal equipment is added to a header of an adaptation layer of the data;
   wherein the third terminal equipment transmits the data to the second terminal equipment, wherein the third terminal equipment adds the first identification information of the first terminal equipment to the header of the adaptation layer of the data.
27. The method according to supplement 24, wherein the transmitting data according to the first identification information of the first terminal equipment and/or the first identification information of the second terminal equipment includes:
   transmitting the data to the third terminal equipment, wherein the first identification information of the second terminal equipment is added to the header of the adaptation layer of the data;
   wherein the third terminal equipment transmits the data to the second terminal equipment, wherein the third terminal equipment adds the first identification information of the first terminal equipment and the first identification information of the second terminal equipment to the header of the adaptation layer of the data.
28. The method according to supplement 24, wherein the transmitting data according to the first identification information of the first terminal equipment and/or the first identification information of the second terminal equipment includes:
   transmitting the data to the third terminal equipment, wherein the first identification information of the first terminal equipment and the first identification information of the second terminal equipment are added to the header of the adaptation layer of the data;
   wherein the third terminal equipment transmits the data to the second terminal equipment, wherein the third terminal equipment adds the first identification information of the first terminal equipment to the header of the adaptation layer of the data.
29. The method according to supplement 24, wherein the transmitting data according to the first identification information of the first terminal equipment and/or the first identification information of the second terminal equipment includes:
   transmitting the data to the third terminal equipment, wherein the first identification information of the first terminal equipment and the first identification information of the second terminal equipment are added to the header of the adaptation layer of the data;
   wherein the third terminal equipment transmits the data to the second terminal equipment, wherein the third terminal equipment adds the first identification information of the first terminal equipment and the first identification information of the second terminal equipment to the header of the adaptation layer of the data.
30. A data reception method, applicable to a second terminal equipment, wherein the method includes:
   determining first identification information of a first terminal equipment and/or first identification information of the second terminal equipment in an adaptation layer of the second terminal equipment; and
   receiving data from a third terminal equipment according to the first identification information of the first terminal equipment and/or the first identification information of the second terminal equipment and/or second identification information of the first terminal equipment and/or second identification information of the second terminal equipment.
31. The method according to supplement 30, wherein the first identification information of the first terminal equipment and/or the first identification information of the second terminal equipment is/are determined according to at least one of the following assignments: a first terminal equipment assignment; a second terminal equipment assignment; a third terminal equipment assignment; and a network device assignment, or preconfiguration.
32. The method according to supplement 30, wherein the receiving data according to the first identification information of the first terminal equipment and/or the first identification information of the second terminal equipment includes:
   receiving the data transmitted by the third terminal equipment,
   wherein the first terminal equipment adds the first identification information of the second terminal equipment to a header of an adaptation layer of the data and transmits the data to the third terminal equipment, and the third terminal equipment adds the first identification information of the first terminal equipment to the header of the adaptation layer of the data and transmits the data.
33. The method according to supplement 30, wherein the receiving data according to the first identification information of the first terminal equipment and/or the first identification information of the second terminal equipment includes:
   receiving the data transmitted by the third terminal equipment,
   wherein the first terminal equipment adds the first identification information of the second terminal equipment in the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.
34. The method according to supplement 30, wherein the receiving data according to the first identification information of the first terminal equipment and/or the first identification information of the second terminal equipment includes:
   receiving the data transmitted by the third terminal equipment,
   wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment to the header of the adaptation layer of the data and transmits the data.
35. The method according to supplement 30, wherein the receiving data according to the first identification information of the first terminal equipment and/or the first identification information of the second terminal equipment includes:
   receiving the data transmitted by the third terminal equipment,
   wherein the first terminal equipment adds the first identification information of the first terminal equipment and the first identification information of the second terminal equipment to the header of the adaptation layer of the data and transmits the data to the third terminal equipment, and the third terminal equipment adds the first identification information of the first terminal equipment and the first identification information of the second terminal equipment to the header of the adaptation layer of the data and transmits the data.
36. A terminal equipment, including a memory and a processor, the memory storing a computer program, and the processor being configured to execute the computer program to carry out the data reception and transmission method as described in any one of supplements 1-23.
37. A terminal equipment, including a memory and a processor, the memory storing a computer program, and the processor being configured to execute the computer program to carry out the data transmission method as described in any one of supplements 24-29.
38. A terminal equipment, including a memory and a processor, the memory storing a computer program, and the processor being configured to execute the computer program to carry out the data reception method as described in any one of supplements 30-35.
39. A communication system, including:
   a first terminal equipment configured to determine first identification information of the first terminal equipment and/or first identification information of a second terminal equipment in an adaptation layer, and transmit data to a third terminal equipment;
   the third terminal equipment configured to receive the data from the first terminal equipment, determine the first identification information of the first terminal equipment and/or the first identification information of the second terminal equipment in the adaptation layer, and transmit the data to the second terminal equipment according to the first identification information of the first terminal equipment and/or the first identification information of the second terminal equipment and/or second identification information of the first terminal equipment and/or second identification information of the second terminal equipment; and
   the second terminal equipment configured to determine the first identification information of the first terminal equipment and/or the first identification information of the second terminal equipment in the adaptation layer, and receive the data from the third terminal equipment according to the first identification information of the first terminal equipment and/or the first identification information of the second terminal equipment and/or the second identification information of the first terminal equipment and/or the second identification information of the second terminal equipment.

## Claims

1. A data reception and transmission apparatus, configured in a third terminal equipment, the data reception and transmission apparatus comprising:
a determining unit configured to determine first identification information of a first terminal equipment and/or first identification information of a second terminal equipment in an adaptation layer of the third terminal equipment;
a receiving unit configured to receive data from the first terminal equipment; and
a transmitting unit configured to transmit data to the second terminal equipment according to the first identification information of the first terminal equipment and/or the first identification information of the second terminal equipment and/or second identification information of the first terminal equipment and/or second identification information of the second terminal equipment.

2. The apparatus according to claim 1, wherein the determining unit determines the first identification information of the first terminal equipment and/or the first identification information of the second terminal equipment according to at least one of the following assignments: a first terminal equipment assignment; a second terminal equipment assignment; a third terminal equipment assignment; and a network device assignment, or preconfiguration.

3. The apparatus according to claim 2, wherein the determining unit further comprises a first transmitting module, and in case of the third terminal equipment assignment,
the first transmitting module transmits the first identification information of the first terminal equipment and/or the first identification information of the second terminal equipment to the first terminal equipment; and the first transmitting module transmits the first identification information of the first terminal equipment and/or the first identification information of the second terminal equipment to the second terminal equipment; or,
the first transmitting module transmits the first identification information of the second terminal equipment and the second identification information of the second terminal equipment to the first terminal equipment; and/or, the first transmitting module transmits the first identification information of the first terminal equipment and the second identification information of the first terminal equipment to the second terminal equipment.

4. The apparatus according to claim 2, wherein the determining unit further comprises a first receiving module and/or a second transmitting module, and in case of the first terminal equipment assignment,
the first receiving module receives the first identification information of the first terminal equipment, and/or, the first identification information of the second terminal equipment and the second identification information of the second terminal equipment, transmitted by the first terminal equipment; and the second transmitting module transmits the first identification information of the first terminal equipment and/or the first identification information of the second terminal equipment to the second terminal equipment; or,
the first receiving module receives the first identification information of the first terminal equipment, and/or, the first identification information of the second terminal equipment and the second identification information of the second terminal equipment, transmitted by the first terminal equipment; wherein the first terminal equipment further transmits the first identification information of the first terminal equipment, and/or, the first identification information of the second terminal equipment to the second terminal equipment.

5. The apparatus according to claim 2, wherein the determining unit further comprises a second receiving module and/or a third transmitting module, and in case of the second terminal equipment assignment,
the second receiving module receives the first identification information of the second terminal equipment, and/or, the first identification information of the first terminal equipment and the second identification information of the first terminal equipment transmitted by the second terminal equipment; and the third transmitting module transmits the first identification information of the second terminal equipment and/or the first identification information of the first terminal equipment to the first terminal equipment; or,
the second receiving module receives the first identification information of the second terminal equipment, and/or, the first identification information of the first terminal equipment and the second identification information of the first terminal equipment, transmitted by the second terminal equipment; wherein the second terminal equipment further transmits the first identification information of the second terminal equipment and/or the first identification information of the first terminal equipment to the first terminal equipment.

6. The apparatus according to claim 2, wherein the determining unit further comprises a third receiving module and/or a fourth transmitting module, and in case of the network device assignment,
the third receiving module receives the first identification information of the first terminal equipment and the first identification information of the second terminal equipment, and/or the second identification information of the first terminal equipment, and/or the second identification information of the second terminal equipment, transmitted by the network device; and
the fourth transmitting module transmits the first identification information of the first terminal equipment and/or the second identification information of the first terminal equipment and/or the first identification information of the second terminal equipment and/or the second identification information of the second terminal equipment to the first terminal equipment; and/or, the fourth transmitting module transmits the first identification information of the first terminal equipment and/or the second identification information of the first terminal equipment and/or the first identification information of the second terminal equipment and/or the second identification information of the second terminal equipment to the second terminal equipment.

7. The apparatus according to claim 2, wherein the determining unit determines the first identification information of the first terminal equipment and the first identification information of the second terminal equipment, and/or, the second identification information of the first terminal equipment, and/or, the second identification information of the second terminal equipment, according to first preconfiguration information.

8. The apparatus according to claim 7, wherein the determining unit further comprises a fifth transmitting module, and in case of the preconfiguration,
the fifth transmitting module transmits the first identification information of the first terminal equipment and/or the second identification information of the first terminal equipment and/or the first identification information of the second terminal equipment and/or the second identification information of the second terminal equipment to the first terminal equipment; and/or,
the fifth transmitting module transmits the first identification information of the first terminal equipment and/or the second identification information of the first terminal equipment and/or the first identification information of the second terminal equipment and/or the second identification information of the second terminal equipment to the second terminal equipment.

9. The apparatus according to claim 3, wherein the first transmitting module transmits the first identification information of the first terminal equipment and/or the first identification information of the second terminal equipment to the first terminal equipment, and transmits the first identification information of the first terminal equipment and/or the first identification information of the second terminal equipment to the second terminal equipment via first signaling or second signaling; or,
the first transmitting module transmits the first identification information of the second terminal equipment and the second identification information of the second terminal equipment to the first terminal equipment, and/or, transmits the first identification information of the first terminal equipment and the second identification information of the first terminal equipment to the second terminal equipment via first signaling or second signaling.

10. The apparatus according to claim 9, wherein the first signaling is PC5-S signaling, and comprises at least one of the following signaling:
a direct communication request and/or direct communication accept;
a discovery message (a discovery solicitation) and/or a discovery response message (a discovery response); or
other PC5-S messages.

11. The apparatus according to claim 9, wherein the second signaling is PC5-RRC signaling, and comprises at least one of the following signaling:
sidelink RRC reconfiguration information (RRCReconfigurationSidelink),
sidelink RRC reconfiguration complete information (RRCReconfigurationCompleteSidelink),
sidelink UE capacity enquiry information (UECapacityEnquirySidelink),
sidelink UE capacity information (UECapacityInformationSidelink),
sidelink master information block (MasterInformationBlockSidelink),
sidelink UE assistance information (UEAssistanceInformationSidelink),
sidelink remote UE information (RemoteUEInformationSidelink), or
sidelink notification message (NotificationMessageSidelink).

12. The apparatus according to claim 1, wherein the data reception and transmission apparatus further comprises a first adding unit,
and the receiving unit receives data from the first terminal equipment, wherein the first terminal equipment adds the first identification information of the second terminal equipment to a header of an adaptation layer of the data, and after the first adding unit adds the first identification information of the first terminal equipment to the header of the adaptation layer of the data, the transmitting unit transmits the data to the second terminal equipment; or,
the receiving unit receives the data from the first terminal equipment, wherein the first terminal equipment adds the first identification information of the second terminal equipment to the header of the adaptation layer of the data, and after the first adding unit adds the first identification information of the first terminal equipment and the first identification information of the second terminal equipment to the header of the adaptation layer of the data, the transmitting unit transmits the data to the second terminal equipment; or,
the receiving unit receives the data from the first terminal equipment, wherein the first terminal equipment adds the first identification information of the first terminal equipment and the first identification information of the second terminal equipment to the header of the adaptation layer of the data, and after the first adding unit adds the first identification information of the first terminal equipment to the header of the adaptation layer of the data, the transmitting unit transmits the data to the second terminal equipment.

13. The apparatus according to claim 12, wherein after the receiving unit receives the data from the first terminal equipment,
the determining unit further determines the first identification information of the first terminal equipment according to the second identification information of the first terminal equipment, and/or determines the second identification information of the second terminal equipment according to the first identification information of the second terminal equipment.

14. The apparatus according to claim 1, wherein the data reception and transmission apparatus further comprises a second adding unit,
the receiving unit receives the data from the first terminal equipment, wherein the first terminal equipment adds the first identification information of the first terminal equipment and the first identification information of the second terminal equipment to the header of the adaptation layer of the data;
and after the second adding unit adds the first identification information of the first terminal equipment and the first identification information of the second terminal equipment to the header of the adaptation layer of the data, the transmitting unit transmits the data to the second terminal equipment.

15. The apparatus according to claim 12, wherein after the receiving unit receives the data transmitted by the first terminal equipment, the determining unit further determines the second identification information of the second terminal equipment according to the first identification information of the second terminal equipment.

16. The apparatus according to claim 1, wherein the first terminal equipment is a source remote device, the second terminal equipment is a destination remote device, and the third terminal equipment is a relay device.

17. The apparatus according to claim 1, wherein the first identification information is an identifier of a terminal equipment used in an adaptation layer, and the second identification information is a layer 2 identifier (L2 ID).

18. A data transmission apparatus, configured in a first terminal equipment, wherein the data transmission apparatus comprises:
a determining unit configured to determine first identification information of the first terminal equipment and/or first identification information of a second terminal equipment in an adaptation layer of the first terminal equipment; and
a transmitting unit configured to transmit data to a third terminal equipment according to the first identification information of the first terminal equipment and/or the first identification information of the second terminal equipment and/or second identification information of the first terminal equipment and/or second identification information of the second terminal equipment.

19. A data reception apparatus, configured in a second terminal equipment, wherein the data reception apparatus comprises:
a determining unit configured to determine first identification information of a first terminal equipment and/or first identification information of the second terminal equipment in an adaptation layer of the second terminal equipment; and
a receiving unit configured to receive data from a third terminal equipment according to the first identification information of the first terminal equipment and/or the first identification information of the second terminal equipment and/or second identification information of the first terminal equipment and/or second identification information of the second terminal equipment.

20. A communication system, comprising:
a first terminal equipment configured to determine first identification information of the first terminal equipment and/or first identification information of a second terminal equipment in an adaptation layer, and transmit data to a third terminal equipment;
the third terminal equipment configured to receive the data from the first terminal equipment, determine the first identification information of the first terminal equipment and/or the first identification information of the second terminal equipment in the adaptation layer, and transmit the data to the second terminal equipment according to the first identification information of the first terminal equipment and/or the first identification information of the second terminal equipment and/or second identification information of the first terminal equipment and/or second identification information of the second terminal equipment; and
the second terminal equipment configured to determine the first identification information of the first terminal equipment and/or the first identification information of the second terminal equipment in the adaptation layer, and receive the data from the third terminal equipment according to the first identification information of the first terminal equipment and/or the first identification information of the second terminal equipment and/or the second identification information of the first terminal equipment and/or the second identification information of the second terminal equipment.
